(19) Europäisches Patentamt
European Patent Office
Office européen des brevets

(11) **EP 2 981 573 B1**

(12) **EUROPEAN PATENT SPECIFICATION**

(45) Date of publication and mention of the grant of the patent:
**20.06.2018 Bulletin 2018/25**

(21) Application number: **14719367.6**

(22) Date of filing: **31.03.2014**

(51) Int Cl.:
*C23C 18/16* (2006.01)     *C23C 18/20* (2006.01)
*C23C 18/38* (2006.01)     *C08K 3/013* (2018.01)
*C08K 3/22* (2006.01)      *C08K 7/14* (2006.01)

(86) International application number:
**PCT/IB2014/060331**

(87) International publication number:
**WO 2014/162254 (09.10.2014 Gazette 2014/41)**

(54) **HIGH MODULUS LASER DIRECT STRUCTURING COMPOSITES**

KOMPOSITE MIT LASERDIREKTSTRUKTURIERUNG UND MIT HOHEM MODULUS

COMPOSITES POUR STRUCTURATION DIRECTE PAR LASER AVEC UN MODULE ÉLEVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2013 US 201361807239 P**

(43) Date of publication of application:
**10.02.2016 Bulletin 2016/06**

(73) Proprietor: **SABIC Global Technologies B.V.**
**4612 PX Bergen op Zoom (NL)**

(72) Inventors:
• **CHENG, Yunan**
**Pudong**
**Shanghai 201203 (CN)**
• **WU, Tong**
**Pudong**
**Shanghai 201319 (CN)**
• **YAN, Yangang**
**Pudong**
**Shanghai 201319 (CN)**
• **AN, Yuxian**
**Pudong**
**Shanghai 201319 (CN)**

(74) Representative: **Chevalier, Renaud Philippe et al**
**Cabinet Germain & Maureau**
**BP 6153**
**69466 Lyon Cedex 06 (FR)**

(56) References cited:
EP-A1- 2 703 435     EP-A1- 2 711 399
WO-A1-2012/128219     WO-A1-2013/076314
WO-A1-2013/183789     WO-A1-2014/042285
US-A1- 2009 292 051     US-A1- 2012 276 390
US-A1- 2012 329 922

EP 2 981 573 B1

**Description**

BACKGROUND

Electrical components can be provided as molded injection devices ("MID") with desired printed conductors. In contrast to conventional circuit boards made of fiberglass-reinforced plastic or the like, MID components manufactured in this way are three-dimensional ("3D") molded parts having an integrated printed conductor layout and possibly further electronic or electromechanical components. The use of MID components of this type, even if the components have only printed conductors and are used to replace conventional wiring inside an electrical or electronic device, saves space, allowing the relevant device to be made smaller. It also lowers the manufacturing costs by reducing the number of assembly and contacting steps. These MID devices have great utility in cell phones, PDAs and notebook applications.

Stamp metal, flexible printed circuit board ("FPCB") mounted and two-shot molding methods are three existing technologies to make an MID. However, stamping and FPCB mounted process have limitations in the pattern geometry, and the tooling is expensive. Also, altering of a radio frequency ("RF") pattern causes high-priced and time-consuming modifications in tooling. 2-shot-molding (two-component injection molding) processes have also been used to produce 3D-MIDs with real three-dimensional structures. For example, an antenna can be formed by subsequent chemical corrosion, chemical surface activation and selective metal coating. This method involves relatively high initial costs and is only economically viable for large production numbers. 2-shot-molding is also not regarded as an environmentally friendly process. All of these three methods are tool-based technologies, which have limited flexibility, long development cycles, difficult prototype, expensive design changes, and limited ability to produce miniaturization. Accordingly, it is increasingly popular to form MIDs using a laser direct structuring ("LDS") process. In an LDS process a computer-controlled laser beam travels over the MID to activate the plastic surface at locations where the conductive path is to be situated.

Laser-supported or directed structuring process (LDS) for 3D MIDs simplifies the manufacturing process. For example, the LDS process allows for antenna structures to be directly and cost effectively integrated into a cell phone housing. Further, the LDS process allows for sophisticated mechatronic systems that integrate mechanical and electrical properties for automotive and medical applications. With a laser direct structuring process, it is also possible to obtain small conductive path widths (such as 150 micrometers ($\mu$m) or less). In addition, the spacing between the conductive paths can also be small. As a result, MIDs formed from this process can save space and weight in end-use applications. Another advantage of laser direct structuring is its flexibility. If the design of the circuit is to be changed, it is simply a matter of reprogramming the computer that controls the laser.

Accordingly, LDS technology is useful in mobile phones and notebooks where thinner, stronger and multiple antenna functions are especially needed. As a consequence of these demands, polymer composites are required which have high flow and strength and can be used in LDS processes.

Accordingly, what is needed are polymer compositions which have good plating performance, high tensile strength and can be readily used in LDS processes. Such polymer compositions will be particularly useful, for example, in industries (e.g., cell phones and notebooks) which require multiple antenna functions.

The application WO 2012/128219 A1 discloses thermoplastic resin compositions for laser direct structuring comprising 10 to 150 parts by weight of an inorganic fiber and 1 to 30 parts by weight of laser direct structuring additive, per 100 parts by weight of the thermoplastic resin. The laser direct structuring additive contains at least one of copper, antimony, and tin and has a Moh's hardness of 1.5 or smaller than the inorganic fiber.

SUMMARY

In accordance with the purpose of the invention, as embodied and broadly described herein, the invention satisfies these and other needs. In one embodiment, a polymer composition can comprise a thermoplastic polymer, a laser direct structuring additive, and a glass reinforcement component as claimed in any one of claims 1 to 9. As an example, the polymer composition is capable of being plated after being activated using a laser.

In another embodiment, another polymer composition can comprise a thermoplastic polymer, a laser direct structuring additive, and a reinforcing filler. As an example, the polymer composition is capable of being plated after being activated using a laser. As a further example, the flexural modulus is greater than about 3 gigapascals (GPa) and the tensile modulus is greater than about 3 GPa.

Also disclosed is a method for making a polymer composition as claimed in claims 10 to 12 comprising forming a blend composition comprising a thermoplastic polymer, a laser direct structuring additive, and a reinforcing filler, wherein the polymer composition is capable of being plated after being activated using a laser, and wherein the flexural modulus is greater than about 3 GPa and the tensile modulus is greater than about 3 GPa.

Also disclosed is an article of manufacture as claimed in claims 13 and 14 comprising the disclosed polymer composition.

While embodiments of the present invention can be described and claimed in a particular statutory class, such as the system statutory class, this is for convenience only and one of skill in the art will understand that each embodiment of the present invention can be described and claimed in any statutory class. Unless otherwise expressly stated, it is in no way intended that any method or embodiment set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of embodiments described in the specification.

Other advantages will be set forth in part in the description which follows or may be learned by practice. The advantages will be realized and attained by means of the elements and combinations particularly pointed in the appended claims. It is to be understood that both the foregoing general description and the following detailed description are exemplary and explanatory only and are not restrictive, as claimed.

DETAILED DESCRIPTION

The present invention can be understood more readily by reference to the following detailed description, examples, drawings, and claims, and their previous and following description. However, before the present compositions, articles, devices, systems, and/or methods are disclosed and described, it is to be understood that this invention is not limited to the specific compositions, articles, devices, systems, and/or methods disclosed unless otherwise specified, as such can, of course, vary. It is also to be understood that the terminology used herein is for the purpose of describing particular embodiments only and is not intended to be limiting.

The following description of the invention is also provided as an enabling teaching of the invention in its best, currently known embodiment.

Various combinations of elements of this disclosure are encompassed by this invention, e.g., combinations of elements from dependent claims that depend upon the same independent claim.

A weight percent (wt%) of a component, unless specifically stated to the contrary, is based on the total weight of the formulation or composition in which the component is included. For example if a particular element or component in a composition or article is said to have 8% weight, it is understood that this percentage is relation to a total compositional percentage of 100%.

Compounds disclosed herein are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this invention belongs.

The term "alkyl group" as used herein is a branched or unbranched saturated hydrocarbon group of 1 to 24 carbon atoms, such as methyl, ethyl, n-propyl, isopropyl, n-butyl, isobutyl, t-butyl, pentyl, hexyl, heptyl, octyl, decyl, tetradecyl, hexadecyl, eicosyl, tetracosyl and the like. A "lower alkyl" group is an alkyl group containing from one to six carbon atoms.

The term "alkoxy" as used herein is an alkyl group bound through a single, terminal ether linkage; that is, an "alkoxy" group can be defined as -OR where R is alkyl as defined above. A "lower alkoxy" group is an alkoxy group containing from one to six carbon atoms.

The term "alkenyl group" as used herein is a hydrocarbon group of from 2 to 24 carbon atoms and structural formula containing at least one carbon-carbon double bond. Asymmetric structures such as (AB)C=C(CD) are intended to include both the E and Z isomers. This can be presumed in structural formulae herein wherein an asymmetric alkene is present, or it can be explicitly indicated by the bond symbol C.

The term "alkynyl group" as used herein is a hydrocarbon group of 2 to 24 carbon atoms and a structural formula containing at least one carbon-carbon triple bond.

The term "aryl group" as used herein is any carbon-based aromatic group including, but not limited to, benzene, naphthalene, etc. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorus. The aryl group can be substituted or unsubstituted. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "cycloalkyl group" as used herein is a non-aromatic carbon-based ring composed of at least three carbon atoms. Examples of cycloalkyl groups include, but are not limited to, cyclopropyl, cyclobutyl, cyclopentyl, cyclohexyl, etc. The term "heterocycloalkyl group" is a cycloalkyl group as defined above where at least one of the carbon atoms of the ring is substituted with a heteroatom such as, but not limited to, nitrogen, oxygen, sulphur, or phosphorus.

The term "aralkyl" as used herein is an aryl group having an alkyl, alkynyl, or alkenyl group as defined above attached to the aromatic group. An example of an aralkyl group is a benzyl group.

The term "ester" as used herein is represented by the formula -C(O)OA, where A can be an alkyl, halogenated alkyl, alkenyl, alkynyl, aryl, heteroaryl, cycloalkyl, cycloalkenyl, heterocycloalkyl, or heterocycloalkenyl group described above.

The term "carbonate group" as used herein is represented by the formula -OC(O)OR, where R can be hydrogen, an alkyl, alkenyl, alkynyl, aryl, aralkyl, cycloalkyl, halogenated alkyl, or heterocycloalkyl group described above.

The term "carboxylic acid" as used herein is represented by the formula -C(O)OH.

The term "aldehyde" as used herein is represented by the formula -C(O)H.

The term "keto group" as used herein is represented by the formula -C(O)R, where R is an alkyl, alkenyl, alkynyl, aryl, aralkyl, cycloalkyl, halogenated alkyl, or heterocycloalkyl group described above.

The term "carbonyl group" as used herein is represented by the formula C=O.

The term "ether" as used herein is represented by the formula $AOA^1$, where A and $A^1$ can be, independently, an alkyl, halogenated alkyl, alkenyl, alkynyl, aryl, heteroaryl, cycloalkyl, cycloalkenyl, heterocycloalkyl, or heterocycloalkenyl group described above.

As used herein, the terms "number average molecular weight" or "Mn" can be used interchangeably, and refer to the statistical average molecular weight of all the polymer chains in the sample and is defined by the formula:

$$Mn = \frac{\sum N_i M_i}{\sum N_i}$$

where $M_i$ is the molecular weight of a chain and $N_i$ is the number of chains of that molecular weight. Mn can be determined for polymers, such as polycarbonate polymers or polycarbonate-PMMA copolymers, by methods well known to a person having ordinary skill in the art. It is to be understood that as used herein, Mn is measured using gel permeation chromatography as calibrated with polycarbonate standards. For example, gel permeation chromatography can be carried out using a crosslinked styrene-divinyl benzene column, at a sample concentration of 1 milligram per milliliter (mg/ml) with appropriate mobile phase solvents.

As used herein, the terms "weight average molecular weight" or "Mw" can be used interchangeably, and are defined by the formula:

$$M_w = \frac{\sum N_i M_i{}^2}{\sum N_i M_i},$$

where $M_i$ is the molecular weight of a chain and $N_i$ is the number of chains of that molecular weight. Compared to Mn, Mw takes into account the molecular weight of a given chain in determining contributions to the molecular weight average. Thus, the greater the molecular weight of a given chain, the more the chain contributes to the Mw. It is to be understood that as used herein, Mw is measured gel permeation chromatography. In some cases, Mw is measured gel permeation chromatography and calibrated with polycarbonate standards. Gel permeation chromatography can be carried out using a crosslinked styrene-divinyl benzene column, at a sample concentration of about 1 milligram per milliliter with appropriate mobile phase solvents.

As used herein, the terms "polydispersity index" or "PDI" can be used interchangeably, and are defined by the formula:

$PDI = \frac{Mw}{Mn}$ The PDI has a value equal to or greater than 1, but as the polymer chains approach uniform chain length, the PDI approaches unity.

The terms "polycarbonate" or "polycarbonates" as used herein includes copolycarbonates, homopolycarbonates and (co)polyester carbonates.

The terms "residues" and "structural units", used in reference to the constituents of the polymers, are synonymous throughout the specification.

Each of the component materials disclosed herein are either commercially available and/or the methods for the production thereof are known to those of ordinary skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

As summarized above, the disclosure provides high modulus polymer compositions that are particularly useful in connection with laser direct structuring (LDS) technology. For example, as described in greater detail below, embodiments of the disclosure provide high modulus polymer compositions with enhanced plating performance that are capable of being used in a laser direct structuring (LDS) process. To that end, the disclosed polymer compositions generally comprise a blend comprising a thermoplastic polymer, a laser direct structuring additive, and a reinforcing filler.

The disclosed polymer compositions disclosed herein provide robust plating performance while maintaining superior tensile and flexural modulus properties. Robustness of plating performance can be measured via a performance ranking, or plating ranking, ranging from top performance (e.g., "best") to bottom performance. The ranking can be partitioned in various levels. In one embodiment, a plating ranking can have a level of "10" for top performance and a level of "0" for bottom performance.

The disclosed polymer compositions can exhibit, for example, improved mechanical, thermal, and/or morphological properties. Even further for example, the polymer compositions may show improved ductility and improved impact strength without adversely affecting other mechanical and thermal properties.

According to embodiments of the disclosure, a molded article formed from the disclosed polymer compositions can exhibit a notched Izod impact energy at 23°C at 2 pound-force foot (lbf/ft). In further embodiments, a molded article formed from a disclosed polymer composition can exhibit a notched Izod impact energy at 23°C in the range of from 50 Joules per meter (J/m) to 250 J/m, including exemplary values of 60 J/m, 70 J/m, 80 J/m, 90 J/m, 100 J/m, 110 J/m, 120 J/m, 130 J/m, 140 J/m, 150 J/m, 160 J/m, 170 J/m, 180 J/m, 190 J/m, 200 J/m, 210 J/m, 220 J/m, 230 J/m, and 240 J/m. In still further embodiments, a molded article formed from a disclosed polymer composition can exhibit a notched Izod impact energy at 23°C in any range derived from any two values set forth above. For example, a molded article formed from a polymer composition can exhibit a notched Izod impact energy at 23°C in the range of from 140 J/m to 160 J/m.

According to embodiments of the disclosure, a molded article formed from the disclosed polymer compositions can exhibit an unnotched Izod impact energy at 23°C at 5 lbf/ft. In further embodiments, a molded article formed from a disclosed polymer composition can exhibit a an unnotched Izod impact energy at 23°C in the range of from 550 J/m to 850 J/m, including exemplary impact energy values of 560 J/m, 570 J/m, 580 J/m, 590 J/m, 600 J/m, 610 J/m, 620 J/m, 630 J/m, 640 J/m, 650 J/m, 660 J/m, 670 J/m, 680 J/m, 690 J/m, 700 J/m, 710 J/m, 720 J/m, 730 J/m, 740 J/m, 750 J/m, 760 J/m, 770 J/m, 780 J/m, 790 J/m, 800 J/m, 810 J/m, 820 J/m, 830 J/m, and 840 J/m. In still further embodiments, a molded article formed from a disclosed polymer composition can exhibit an unnotched Izod impact energy at 23°C in any range derived from any two values set forth above. For example, a molded article formed from a polymer composition can exhibit an unnotched Izod impact energy at 23 °C in the range of from 650 J/m to 750 J/m.

In still further embodiments, molded articles formed from the disclosed polymer compositions exhibit improved ductility. For example, a molded article formed from a disclosed polymer composition can exhibit a % ductility of 100% as measured according to ASTM D256-2010. In further embodiments, a molded article formed from a disclosed polymer composition can exhibit a % ductility of at least 90% as measured according to ASTM D256-2010. In still a further embodiment, a molded article formed from a disclosed polymer composition can exhibit a % ductility of at least 80% as measured according to ASTM D256-2010.

According to embodiments of the disclosure, molded articles formed from the disclosed polymer compositions can exhibit improved tensile modulus. For example, the tensile modulus can be in the range of greater than 3.0 GPa. In yet another embodiment, a molded article formed from the disclosed polymer composition exhibits tensile modulus least about 3 GPa to about 10 GPa, including exemplary values of about 3.1 GPa, 3.2 GPa, 3.3 GPa, 3.4 GPa, 3.5 GPa, 3.6 GPa, 3.7 GPa, 3.8 Gpa, 3.9 GPa, 4.0 GPa,4.1 GPa, 4.2 GPa, 4.3 GPa, 4.4 GPa, 4.5 GPa, 4.6 GPa, 4.7 GPa, 4.8 GPa, 4.9 GPa, 5.0 GPa, 5.1 GPa, 5.2 GPa, 5.3 GPa, 5.4 GPa, 5.5 GPa, 5.6 GPa, 5.7 GPa, 5.8 GPa, 5.9 GPa, 6.0 GPa, 6.1 GPa, 6.2 GPa, 6.3 GPa, 6.4 GPa, 6.5 GPa, 6.6 GPa, 6.7 GPa, 6.8 GPa, 6.9 GPa, 7.0 GPa, 7.1 GPa, 7.2 GPa, 7.3 GPa, 7.4 GPa, 7.5 GPa, 7.6 GPa, 7.7 GPa, 7.8 GPa, 7.9 GPa, 8.0 GPa, 8.1 GPa, 8.2 GPa, 8.3 GPa, 8.4 GPa, 8.5 GPa, 8.6 GPa, 8.7 GPa, 8.8 GPa, 8.9 GPa, 9.0 GPa, 9.1 GPa, 9.2 GPa, 9.3 GPa, 9.4 GPa, 9.5 GPa, 9.6 GPa, 9.7 GPa, 9.8 GPa, and 9.9 GPa. In another embodiment, the tensile modulus can be in any range derived from any two of the above tensile modulus values. For example, the tensile modulus can be in the range of from about 7.0 GPa to about 9.0 GPa. In a still further embodiment, the tensile modulus can be in the range of from about 7.1 GPa to about 8.9 GPa.

In yet another embodiment, a molded article formed from the disclosed polymer composition exhibits tensile strength ranging from 50 megapascals (MPa) to 250 MPa, including exemplary values of about 60 MPa, 70 MPa, 80 MPa, 90 MPa, 100 MPa, 110 MPa, 120 MPa, 130 MPa, 140 MPa, 150 MPa, 160 MPa, 170 MPa, 180 MPa, 190 MPa, 200 MPa, 210 MPa, 220 MPa, 230 MPa, and 240 MPa. In another embodiment, the tensile strength can be in any range derived from any two of the above tensile strength values. For example, the tensile strength can be in the range of from about 50 MPa to 150 MPa. In a still further embodiment, the tensile strength can be in the range of from about 60 MPa to 110 MPa.

In yet another embodiment, a molded article formed from the disclosed polymer composition exhibits flexural strength ranging from 50 MPa to 250 MPa, including exemplary values of about 60 MPa, 70 MPa, 80 MPa, 90 MPa, 100 MPa, 110 MPa, 120 MPa, 130 MPa, 140 MPa, 150 MPa, 160 MPa, 170 MPa, 180 MPa, 190 MPa, 200 MPa, 210 MPa, 220 MPa, 230 MPa, and 240 MPa. In another embodiment, the flexural strength can be in any range derived from any two of the above flexural strength values. For example, the flexural strength can be in the range of from about 100 MPa to 200 MPa. In a still further embodiment, the flexural strength can be in the range of from about 120 MPa to 160 MPa.

In still further embodiments, molded articles formed from the disclosed polymer composition can exhibit desirable values of percent elongation at break. For example, according to embodiments, a molded article formed from the disclosed polymer compositions can exhibit an elongation at break in the range of from 0.1 percent (%) to 30%, including exemplary values of 0.3%, 0.5 %, 0.7% 1.0%, 1.5%, 2.0%, 2.3%, 2.5%, 2.7%, 3.0%, 3.3%, 3.5%, 3.7%, 4.0%, 4.5%, 5.0%, 5.5%, 6%, 7%, 8%, 9%, 10%, 11%, 12%, 13%, 14%, 15%, 16%, 17%, 18%, 19%, 20%, 21% 22%, 23%, 24%, 25%, 26%, 27%, 28%, and 29%. In still further embodiments, the elongation at break percentage can be in a range derived from any two of the above listed exemplary elongation at break percentages. For example, the elongation at break can be in the range of from 10 % to 30 %. In a further embodiment, the elongation at break can be in the range of from 10 % to 20 %.

According to embodiments of the disclosure, molded articles formed from the disclosed polymer compositions can exhibit improved flexural modulus. For example, the flexural modulus can be in the range of greater than 3.0 GPa. In yet another embodiment, a molded article formed from the disclosed polymer composition exhibits a flexural modulus of at least about 3 GPa to about 10 GPa, including exemplary values of about 3.1 GPa, 3.2 GPa, 3.3 GPa, 3.4 GPa, 3.5 GPa, 3.6 GPa, 3.7 GPa, 3.8 Gpa, 3.9 GPa, 4.0 GPa,4.1 GPa, 4.2 GPa, 4.3 GPa, 4.4 GPa, 4.5 GPa, 4.6 GPa, 4.7 GPa, 4.8 GPa, 4.9 GPa, 5.0 GPa, 5.1 GPa, 5.2 GPa, 5.3 GPa, 5.4 GPa, 5.5 GPa, 5.6 GPa, 5.7 GPa, 5.8 GPa, 5.9 GPa, 6.0 GPa, 6.1 GPa, 6.2 GPa, 6.3 GPa, 6.4 GPa, 6.5 GPa, 6.6 GPa, 6.7 GPa, 6.8 GPa, 6.9 GPa, 7.0 GPa, 7.1 GPa, 7.2 GPa, 7.3 GPa, 7.4 GPa, 7.5 GPa, 7.6 GPa, 7.7 GPa, 7.8 GPa, 7.9 GPa, 8.0 GPa, 8.1 GPa, 8.2 GPa, 8.3 GPa, 8.4 GPa, 8.5 GPa, 8.6 GPa, 8.7 GPa, 8.8 GPa, 8.9 GPa, 9.0 GPa, 9.1 GPa, 9.2 GPa, 9.3 GPa, 9.4 GPa, 9.5 GPa, 9.6 GPa, 9.7 GPa, 9.8 GPa, and 9.9 GPa. In another embodiment, the flexural modulus can be in any range derived from any two of the above flexural modulus values. For example, the flexural modulus can be in the range of from about 7.0 GPa to about 9.0 GPa. In a still further embodiment, the flexural modulus can be in the range of from about 7.1 GPa to about 8.9 GPa.

According to embodiments of the disclosure, molded articles formed from the disclosed polymer compositions can exhibit improved plating index. For example, the plating index can be in a range of from 0.1 to 2.0, including exemplary values of 0.2, 0.3, 0.4, 0.5, 0.6, 0.7, 0.8, 0.9, 1.0, 1.1, 1.2, 1.3, 1.4, 1.5, 1.6, 1.7, 1.8, and 1.9. In the plating index can be in a range derived from any two of the above plating index values. For example, the plating index can be in a range of from 0.9 to 1.1. Further for example, the plating index can be in a range of from 0.5 to 1.5.

In still further embodiments, molded articles formed from the disclosed polymer compositions can exhibit desirable heat deflection temperatures (HDT). For example, a molded article formed from a disclosed polymer composition can exhibit a heat deflection temperature in the range of from 90 °C to 150 °C. In another embodiment, a molded article formed from a disclosed polymer composition can exhibit a heat deflection temperature in the range of from 100 °C to 130 °C. In another embodiment, a molded article formed from a disclosed polymer composition can exhibit a heat deflection temperature in the range of from 110 °C to 130 °C. In still further exemplary embodiments, a molded article formed from a disclosed polymer composition can exhibit a heat deflection temperature of 126 °C.

In one embodiment, the thermoplastic polymer comprises polycarbonate, polycarbonate-polysiloxane, ethylene vinyl acetate, ethylene vinyl alcohol, polyoxymethylene, polyacrylate, polyacrylonitrile, polyamide-imide, polyetherketone, polycaprolactone, polyhydroxyalkanoate, polyimide, polyketone, polylactic acid, polyurethane, or polyvinyl acetate, or a combination thereof. Many other thermoplastic polymers are known to skilled artisan and are within the scope of the present disclosure. Many of the above thermoplastic polymers are either commercially available or may be readily synthesized by well-known synthetic methods.

In still further embodiments, the thermoplastic polymer is present in an amount ranging from 10 wt % to 90 wt %, based on the total weight of the composition, including exemplary values of 15 wt %, 20 wt %, 25 wt %, 30 wt %, 35 wt %, 40 wt %, 45 wt %, 50 wt %, 55 wt %, 60 wt %, 70 wt %, 75 wt %, 80 wt %, and 85 wt %. In another embodiment, the weight percentage can be in any range derived from any two of the above weight percentage values. For example, the thermoplastic polymer can be present in an amount ranging from 15 wt % to 60 wt %. Further for example, the thermoplastic polymer can be present in an amount ranging from 15 wt % to 55 wt %.

The term polycarbonate as used herein is not intended to refer to only a specific polycarbonate or group of polycarbonates, but rather refers to the any one of the class of compounds containing a repeating chain of carbonate groups. In one embodiment, a polycarbonate material can include any one or more of those polycarbonate materials disclosed and described in U.S. Patent No. 7,786,246, which is hereby incorporated by reference in its entirety for the specific purpose of disclosing various polycarbonate compositions and methods for manufacture of same.

In one embodiment, a polycarbonate polymer component as disclosed herein can be an aliphatic-diol based polycarbonate. In another embodiment, the polycarbonate polymer component can comprise a carbonate unit derived from a dihydroxy compound, such as, for example, a bisphenol that differs from the aliphatic diol. In still further embodiments, an exemplary polycarbonate polymer component includes aromatic polycarbonates conventionally manufactured through a transesterification reaction of an one or more aromatic dihydroxy compound(s) and a carbonic acid diester in the presence of one or more catalyst(s).

In one embodiment, non-limiting examples of suitable bisphenol compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxy-3 methylphenyl)cyclohexane 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl) sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy aromatic compounds.

In another embodiment, exemplary bisphenol compounds can comprise 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxy-t-butylphenyl)propane, 3,3-bis(4-hydroxyphenyl)phthalimidine, 2-phenyl-3,3-bis(4-hydroxyphenyl)phthalimidine ("PPPBP"), and 9,9-bis(4-hydroxyphenyl)fluorene. Combinations comprising at least one dihydroxy aromatic compound can also be used. In another embodiment, other types of diols can be present in the polycarbonate.

In a yet another embodiment, polycarbonates with branching groups can be useful, provided that such branching does not significantly adversely affect desired properties of the polycarbonate. Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitictrichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha(dimethylbenzyl)phenol), 4-chloroformyl phthalic anhydride, trimesic acid, and benzophenonetetracarboxylic acid. In one embodiment, a branching agent can be added at a level of about 0.05 to about 2.0 wt%. In a still another embodiment, mixtures comprising linear polycarbonates and branched polycarbonates can be used.

The polycarbonate polymer component can comprise copolymers comprising carbonate units and other types of polymer units, including ester units, and combinations comprising at least one of homopolycarbonates and copolycarbonates. An exemplary polycarbonate copolymer of this type is a polyester carbonate, also known as a polyester-polycarbonate. Such copolymers further contain carbonate units derived from oligomeric ester-containing dihydroxy compounds (also referred to herein as hydroxy end-capped oligomeric acrylate esters). In another embodiment, the first polycarbonate component does not comprise a separate polymer such as a polyester. In one embodiment, an aliphatic-based polycarbonate comprises aliphatic units that are either aliphatic carbonate units derived from aliphatic diols, or a combination of aliphatic ester units derived from aliphatic diacids having greater than 13 carbons.

In one embodiment, the molecular weight of any particular polycarbonate can be determined by, for example, gel permeation chromatography using universal calibration methods based on polystyrene ("PS") standards. Generally polycarbonates can have a weight average molecular weight (Mw), of greater than about 5,000 grams per mole (g/mol) based on PS standards. In one embodiment, the polycarbonates can have a Mw of greater than or equal to about 20,000 g/mol, based on PS standards. In another embodiment, the polycarbonates have a Mw based on PS standards of about 20,000 to 100,000 g/mol, including for example 30,000 g/mol, 40,000 g/mol, 50,000 g/mol, 60,000 g/mol, 70,000 g/mol, 80,000 g/mol, or 90,000 g/mol. In still further embodiments, the polycarbonates have a Mw based on PS standards of about 22,000 to about 50,000 g/mol. In still further embodiments, the polycarbonates have a Mw based on PS standards of about 25,000 to 40,000 g/mol.

Molecular weight (Mw and Mn) as described herein, and polydispersity as calculated therefrom, can be determined using gel permeation chromatography ("GPC"), using a crosslinked styrene-divinylbenzene column, and either PS or polycarbonate ("PC") standards as specified. GPC samples can be prepared in a solvent such as methylene chloride or chloroform at a concentration of about 1 mg/ml, and can be eluted at a flow rate of about 0.2 to 1.0 milliliter per minute (ml/min). In one embodiment, the glass transition temperature (Tg) of a polycarbonate can be less than or equal to about 160 °C, less than or equal to about 150 °C, less than or equal to about 145 °C, less than or equal to about 140 °C, or less than or equal to about 135 °C. In a further embodiment, the glass transition temperature of a polycarbonate can be from about 85 °C to about 160 °C, from about 90 °C to about 160 °C, from about 90 °C to about 150 °C, or from about 90 °C to about 145 °C. In a still further embodiment, the glass transition temperature of a polycarbonate can be from about 85 °C to about 130 °C, from about 90 °C to about 130 °C, from about 90 °C to about 125 °C, or from about 90 °C to about 120 °C.

In one embodiment, disclosed polycarbonate polymer components can be manufactured using an interfacial phase transfer process or melt polymerization. Although the reaction conditions for interfacial polymerization can vary, an exemplary process generally involves dissolving or dispersing a dihydric phenol reactant in aqueous caustic soda or potash, adding the resulting mixture to a water-immiscible solvent medium such as for example methylene chloride, and contacting the reactants with a carbonate precursor (such as phosgene) in the presence of a catalyst such as, for example, triethylamine or a phase transfer catalyst salt, under controlled pH conditions of, for example, about 8 to about 10.

The polycarbonate can, in various embodiments, be prepared by a melt polymerization process. Generally, in the melt polymerization process, polycarbonates are prepared by co-reacting, in a molten state, the dihydroxy reactant(s) and a diaryl carbonate ester, such as diphenyl carbonate, or more specifically in an embodiment, an activated carbonate such as bis(methyl salicyl)carbonate, in the presence of a transesterification catalyst. The reaction can be carried out in typical polymerization equipment, such as one or more continuously stirred reactors ("CSTRs"), plug flow reactors, wire wetting fall polymerizers, free fall polymerizers, wiped film polymerizers, BANBURY™ mixers, single or twin screw extruders, or combinations of the foregoing. In one embodiment, volatile monohydric phenol can be removed from the molten reactants by distillation and the polymer is isolated as a molten residue. In another embodiment, a useful melt process for making polycarbonates utilizes a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl)carbonate, bis(2-acetylphenyl)carboxylate, bis(4-acetylphenyl)carboxylate, or a combination comprising at least one of the foregoing.

The melt polymerization can include a transesterification catalyst comprising a first catalyst, also referred to herein as an alpha catalyst, comprising a metal cation and an anion. In one embodiment, the cation is an alkali or alkaline earth metal comprising Li, Na, K, Cs, Rb, Mg, Ca, Ba, Sr, or a combination comprising at least one of the foregoing. The anion is hydroxide ($OH^-$), superoxide ($O_2^-$), thiolate ($HS^-$), sulfide ($S_2^-$), a $C_{1-20}$ alkoxide, a $C_{6-20}$ aryloxide, a $C_{1-20}$ carboxylate, a phosphate including biphosphate, a $C_{1-20}$ phosphonate, a sulfate including bisulfate, sulfites including bisulfites and metabisulfites, a $C_{1-20}$ sulfonate, a carbonate including bicarbonate, or a combination comprising at least one of the foregoing. In another embodiment, salts of an organic acid comprising both alkaline earth metal ions and alkali metal ions can also be used. Salts of organic acids useful as catalysts are illustrated by alkali metal and alkaline earth metal salts of formic acid, acetic acid, stearic acid and ethyelenediaminetetraacetic acid. The catalyst can also comprise the salt of a non-volatile inorganic acid. By "nonvolatile", it is meant that the referenced compounds have no appreciable vapor pressure at ambient temperature and pressure. In particular, these compounds are not volatile at temperatures at which melt polymerizations of polycarbonate are typically conducted. The salts of nonvolatile acids are alkali metal salts of phosphites; alkaline earth metal salts of phosphites; alkali metal salts of phosphates; and alkaline earth metal salts of phosphates. Exemplary transesterification catalysts include, lithium hydroxide, sodium hydroxide, potassium hydroxide, cesium hydroxide, magnesium hydroxide, calcium hydroxide, barium hydroxide, lithium formate, sodium formate, potassium formate, cesium formate, lithium acetate, sodium acetate, potassium acetate, lithium carbonate, sodium carbonate, potassium carbonate, lithium methoxide, sodium methoxide, potassium methoxide, lithium ethoxide, sodium ethoxide, potassium ethoxide, lithium phenoxide, sodium phenoxide, potassium phenoxide, sodium sulfate, potassium sulfate, $NaH_2PO_3$, $NaH_2PO_4$, $Na_2H_2PO_3$, $KH_2PO_4$, $CsH_2PO_4$, $Cs_2H_2PO_4$, $Na_2SO_3$, $Na_2S_2O_5$, sodium mesylate, potassium mesylate, sodium tosylate, potassium tosylate, magnesium disodium ethylenediaminetetraacetate ("EDTA" magnesium disodium salt), or a combination comprising at least one of the foregoing. It will be understood that the foregoing list is exemplary and should not be considered as limited thereto. In one embodiment, the transesterification catalyst is an alpha catalyst comprising an alkali or alkaline earth salt. In an exemplary embodiment, the transesterification catalyst comprises sodium hydroxide, potassium hydroxide, sodium carbonate, potassium carbonate, sodium methoxide, potassium methoxide, $NaH_2PO_4$, or a combination comprising at least one of the foregoing.

The amount of alpha catalyst can vary widely according to the conditions of the melt polymerization, and can be about 0.001 to about 500 micromole ($\mu$mol). In an embodiment, the amount of alpha catalyst can be about 0.01 to about 20 $\mu$mol, specifically about 0.1 to about 10 $\mu$mol, more specifically about 0.5 to about 9 $\mu$mol, and still more specifically about 1 to about 7 $\mu$mol, per mole of aliphatic diol and any other dihydroxy compound present in the melt polymerization. In another embodiment, a second transesterification catalyst, also referred to herein as a beta catalyst, can optionally be included in the melt polymerization process, provided that the inclusion of such a second transesterification catalyst does not significantly adversely affect the desirable properties of the polycarbonate. Exemplary transesterification catalysts can further include a combination of a phase transfer catalyst of formula $(R3)4Q+X$ above, wherein each R3 is the same or different, and is a $C_{1-10}$ alkyl group; Q is a nitrogen or phosphorus atom; and X is a halogen atom or a $C_{1-8}$ alkoxy group or $C_{6-18}$ aryloxy group. Exemplary phase transfer catalyst salts include, for example,, $[CH_3(CH_2)_3]_4N_X$, $[CH_3(CH_2)_3]_4P_X$, $[CH_3(CH_2)_5]_4N_X$, $[CH_3(CH_2)_6]_4N_X$, $[CH_3(CH_2)_4]_4N_X$, $CH_3[CH_3(CH_2)_3]_3N_X$, and $CH_3[CH_3(CH_2)_2]_3N_X$, wherein X is Cl-, Br-, a $C_{1-8}$ alkoxy group or a $C_{6-18}$ aryloxy group. Examples of such transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphoniumphenolate, or a combination comprising at least one of the foregoing. Other melt transesterification catalysts include alkaline earth metal salts or alkali metal salts. In various embodiments, where a beta catalyst is desired, the beta catalyst can be present in a molar ratio, relative to the alpha catalyst, of less than or equal to 10, specifically less than or equal to 5, more specifically less than or equal to 1, and still more specifically less than or equal to 0.5. In other embodiments, the melt polymerization reaction disclosed herein uses only an alpha catalyst as described hereinabove, and is substantially free of any beta catalyst. As defined herein, "substantially free of' can mean where the beta catalyst has been excluded from the melt polymerization reaction. In one embodiment, the beta catalyst is present in an amount of less than about 10 parts per million (ppm), specifically less than 1 ppm, more specifically less than about 0.1 ppm, more specifically less than or equal to about 0.01 ppm, and more specifically less than or equal to about 0.001 ppm, based on the total weight of all components used in the melt polymerization reaction.

In one embodiment, a melt process employing an activated carbonate is utilized. As used herein, the term "activated carbonate", is defined as a diarylcarbonate that is more reactive than diphenylcarbonate in transesterification reactions. Specific non-limiting examples of activated carbonates include bis(o-methoxycarbonylphenyl)carbonate, bis(o-chlorophenyl)carbonate, bis(o-nitrophenyl)carbonate, bis(o-acetylphenyl)carbonate, bis(o-phenylketonephenyl)carbonate, bis(o-formylphenyl)carbonate. Examples of specific ester-substituted diarylcarbonates include, but are not limited to, bis(methylsalicyl)carbonate (CAS Registry No. 82091-12-1) (also known as "BMSC" or bis(o-methoxycarbonylphenyl)carbonate), bis(ethylsalicyl)carbonate, bis(propylsalicyl)carbonate, bis(butylsalicyl)carbonate, bis(benzylsalicyl)carbonate, bis(methyl-4-chlorosalicyl)carbonate and the like. In one embodiment, bis(methylsalicyl)carbonate is used as the activated carbonate in melt polycarbonate synthesis due to its lower molecular weight and higher vapor pressure. Some non-limiting examples of non-activating groups which, when present in an ortho position, would not be expected to result in activated carbonates are alkyl, cycloalkyl or cyano groups. Some specific and non-limiting examples of non-activated carbonates are bis(o-methylphenyl)carbonate, bis(p-cumylphenyl)carbonate, bis(p-(1,1,3,3-tetramethyl)butylphenyl)carbonate and bis(o-cyanophenyl)carbonate. Unsymmetrical combinations of these structures can also be used as non-activated carbonates.

In one embodiment, an end-capping agent (also referred to as a chain-stopper) can optionally be used to limit molecular weight growth rate, and so control molecular weight in the polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and $C_1$-$C_{22}$ alkyl-substituted phenols such as p-cumyl-phenol, resorcinol monobenzoate, and p- and tertiary-butyl phenol, cresol, and monoethers of diphenols, such as p-methoxyphenol. Alkyl-substituted phenols with branched chain alkyl substituents having 8 to 9 carbon atoms can be specifically mentioned. Certain monophenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

In another embodiment, endgroups can be derived from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In one embodiment, the endgroup of a polycarbonate can comprise a structural unit derived from a diaryl carbonate, where the structural unit can be an endgroup. In a further embodiment, the endgroup is derived from an activated carbonate. Such endgroups can be derived from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups. In another embodiment, the ester endgroup derived from a salicylic ester can be a residue of BMSC or other substituted or unsubstituted bis(alkyl salicyl)carbonate such as bis(ethyl salicyl)carbonate, bis(propyl salicyl)carbonate, bis(phenyl salicyl)carbonate, bis(benzyl salicyl)carbonate, or the like. In one embodiment, where a combination of alpha and beta catalysts are used in the melt polymerization, a polycarbonate polymer prepared from an activated carbonate can comprise endgroups in an amount of less than 2,000 ppm, less than 1,500 ppm, or less than 1,000 ppm, based on the weight of the polycarbonate.

In another embodiment, where only an alpha catalyst is used in the melt polymerization, a polycarbonate polymer prepared from an activated carbonate can comprise endgroups in an amount of less than or equal to 500 ppm, less than or equal to 400 ppm, less than or equal to 300 ppm, or less than or equal to 200 ppm, based on the weight of the polycarbonate.

In one embodiment, the reactants for the polymerization reaction using an activated aromatic carbonate can be charged into a reactor either in the solid form or in the molten form. Initial charging of reactants into a reactor and subsequent mixing of these materials under reactive conditions for polymerization can be conducted in an inert gas atmosphere such as a nitrogen atmosphere. The charging of one or more reactants can also be done at a later stage of the polymerization reaction. Mixing of the reaction mixture is accomplished by any methods known in the art, such as by stirring. Reactive conditions include time, temperature, pressure and other factors that affect polymerization of the reactants. Typically the activated aromatic carbonate is added at a mole ratio of 0.8 to 1.3, and more preferably 0.9 to 1.3, and all subranges there between, relative to the total moles of monomer unit compounds (i.e., aromatic dihydroxy compound, and aliphatic diacid or diol). In a specific embodiment, the molar ratio of activated aromatic carbonate to monomer unit compounds is 1.013 to 1.29, specifically 1.015 to 1.028. In another specific embodiment, the activated aromatic carbonate is BMSC.

In one embodiment, the melt polymerization reaction can be conducted by subjecting the reaction mixture to a series of temperature-pressure-time protocols. In some embodiments, this involves gradually raising the reaction temperature in stages while gradually lowering the pressure in stages. In one embodiment, the pressure is reduced from about atmospheric pressure at the start of the reaction to about 1 millibar (100 pascals (Pa)) or lower, or in another embodiment to 0.1 millibar (10 Pa) or lower in several steps as the reaction approaches completion. The temperature can be varied in a stepwise fashion beginning at a temperature of about the melting temperature of the reaction mixture and subsequently increased to final temperature. In one embodiment, the reaction mixture is heated from room temperature to about 150 °C. In such an embodiment, the polymerization reaction starts at a temperature of about 150 °C to about 220 °C. In another embodiment, the polymerization temperature can be up to about 220 °C. In other embodiments, the polymerization reaction can then be increased to about 250 °C and then optionally further increased to a temperature of about 320 °C, and all sub-ranges there between. In one embodiment, the total reaction time can be from about 30 minutes to about 200 minutes and all sub-ranges there between. This procedure will generally ensure that the reactants react to give polycarbonates with the desired molecular weight, glass transition temperature and physical properties. The reaction proceeds to build the polycarbonate chain with production of ester-substituted alcohol by-product such as methyl salicylate. In one embodiment, efficient removal of the by-product can be achieved by different techniques such as reducing the pressure. Generally the pressure starts relatively high in the beginning of the reaction and is lowered progressively throughout the reaction and temperature is raised throughout the reaction.

In one embodiment, the progress of the reaction can be monitored by measuring the melt viscosity or the weight average molecular weight of the reaction mixture using techniques known in the art such as gel permeation chromatography. These properties can be measured by taking discrete samples or can be measured on-line. After the desired melt viscosity and/or molecular weight is reached, the final polycarbonate product can be isolated from the reactor in a solid or molten form. It will be appreciated by a person skilled in the art, that the method of making aliphatic homopolycarbonate and aliphatic-aromatic copolycarbonates as described in the preceding sections can be made in a batch or a continuous process and the process disclosed herein is preferably carried out in a solvent free mode. Reactors chosen should ideally be self-cleaning and should minimize any "hot spots." However, vented extruders similar to those that are commercially available can be used.

In one embodiment, the aliphatic homopolycarbonate and aliphatic-aromatic copolycarbonate can be prepared in an extruder in presence of one or more catalysts, wherein the carbonating agent is an activated aromatic carbonate. In one embodiment, the reactants for the polymerization reaction can be fed to the extruder in powder or molten form. In another embodiment, the reactants are dry blended prior to addition to the extruder. The extruder can be equipped with pressure reducing devices (e.g., vents), which serve to remove the activated phenol by-product and thus drive the polymerization reaction toward completion. The molecular weight of the polycarbonate product can, in various embodiments, be manipulated by controlling, among other factors, the feed rate of the reactants, the type of extruder, the extruder screw design and configuration, the residence time in the extruder, the reaction temperature and the pressure reducing techniques present on the extruder. The molecular weight of the polycarbonate product can also depend upon the structures of the reactants, such as, activated aromatic carbonate, aliphatic diol, dihydroxy aromatic compound, and the catalyst employed. Many different screw designs and extruder configurations are commercially available that use single screws, double screws, vents, back flight and forward flight zones, seals, and sidestreams. One skilled in the art can find the best designs using generally known principals of commercial extruder design. Controlling the ratio diarylcarbonate/diol, specifically BMSC/diol can impact the Mw when using an activated carbonate. A lower ratio can generally give a higher molecular weight.

In an exemplary embodiment, the polycarbonate polymer component comprises a bisphenol Apolycarbonate polymer. In another exemplary embodiment, the polycarbonate component comprises a blend of at least two different grade bisphenol A polycarbonates. To that end, a polycarbonate grade can, for example, be characterized by the melt volume rate ("MVR") of the polycarbonate. For example, a disclosed polycarbonate, such as a bisphenol A polycarbonate, can be characterized by exhibiting a Melt Flow Rate ("MFR") in the range of from 4 grams per 10 minutes (g/10 min) to 30 g/10 min at 300 °C/1.2 kg. For example, the MFR can range from 10 g/10 min to 30 g/10 min, including for example a MFR in the range of from 15 g/10 min to 30 g/10 min. Further, for example, the MFR can be in the range of from 5 g/10 min to 30 g/10 min.

The polycarbonate component can be present in the polymer composition in any desired amount. For example, according to embodiments of the disclosure, the polycarbonate polymer component can be present in an amount in the range of from about 10 weight % up to about 90 weight % relative to the total weight of the polymer composition, including further exemplary amounts of about 10 weight %, 15 weight %, 20 weight %, 25 weight %, 30 weight %, 35 weight %, 40 weight %, 45 weight %, 50 weight %, 55 weight %, 60 weight %, 65 weight %, 70 weight %, 75 weight %, 80 weight %, and 90 weight %. In still further embodiments, the polycarbonate component can be present within any range of amount derived from any two of the above states values. For example, the polycarbonate polymer component can be present in an amount in the range of from about 10 weight % to about 15 weight %, or in an amount in the range of from about 5 weight % to about 20 weight %, or in an amount in the range of from about 50 weight % to about 80 weight %.

In embodiments where the polycarbonate component comprises a blend of two or more polycarbonate polymers, it should be understood that each respect polycarbonate polymer present within the polycarbonate component can be present in any desired amount relative to the total weight percentage of the polycarbonate polymer component. For example, in an embodiment wherein the polycarbonate polymer component comprises at least a first and a second polycarbonate polymer, the first polycarbonate polymer can be present in an amount in the range of from greater than 0 weight % to less than 100 weight % relative to the total weight of the polycarbonate polymer component. Similarly, the second polycarbonate polymer can also be present in an amount in the range of from greater than 0 weight % to less than 100 weight % relative to the total weight of the polycarbonate polymer component.

For example, in an exemplary embodiment, a polycarbonate polymer component comprising two different grade bisphenol A polycarbonates can be present in the polymer composition in an amount in the range of from about 14 to 16 weight percent. According to this embodiment, a first bisphenol A polycarbonate can be present in an amount in the range of from about 5 weight percent to about 6 weight percent relative to the total weight of polymer composition or, expressed in an alternative manner, in an amount in the range of from 35 weight percent to about 45 weight percent relative to the total weight percent of the polycarbonate component. Likewise, the second bisphenol A polycarbonate can be present in an amount in the range of from about 9 to about 10 weight percent relative to the total weight of polymer composition or, expressed in an alternative manner, in an amount in the range of from 55 weight percent to about 65 weight percent relative to the total weight percent of the polycarbonate component. In at least one embodiment, the at least one polycarbonate comprises at least 5 weight % relative to the polymer composition's total weight percentage. For example, the total polycarbonate amount ranges from 5 weight % to 14 weight %, relative to the polymer composition's total weight percentage.

In another exemplary embodiment, a polycarbonate polymer component comprising two different grade bisphenol A polycarbonates can be present in the polymer composition in an amount in the range of from about 70 to 72 weight %. According to this embodiment, a first bisphenol A polycarbonate can be present in an amount in the range of from about 53 weight % to about 54 weight % relative to the total weight of polymer composition or, expressed in an alternative manner, in an amount in the range of from 73 weight % to about 78 weight % relative to the total weight % of the polycarbonate component. Likewise, the second bisphenol A polycarbonate can be present in an amount in the range of from about 17 weight % to about 18 % percent relative to the total weight of polymer composition or, expressed in an alternative manner, in an amount in the range of from 22 weight % to about 27 weight % relative to the total weight percent of the polycarbonate component.

The disclosed polymer compositions further comprise a polycarbonate-polysiloxane block copolymer component. As used herein, the term polycarbonate-polysiloxane copolymer is equivalent to polysiloxane-polycarbonate copolymer, polycarbonate-polysiloxane polymer, or polysiloxane-polycarbonate polymer. The polysiloxane-polycarbonate copolymer comprises polydiorganosiloxane blocks comprising structural units of the general formula (I) below:

$$(I)$$

wherein the polydiorganosiloxane block length (E) is from about 20 to about 60; wherein each R group can be the same or different, and is selected from a $C_{1-13}$ monovalent organic group; wherein each M can be the same or different, and is selected from a halogen, cyano, nitro, $C_1$-$C_8$alkylthio, $C_1$-$C_8$ alkyl, $C_1$-$C_8$ alkoxy, $C_2$-$C_8$ alkenyl, $C_2$-$C_8$alkenyloxy group, $C_3$-$C_8$ cycloalkyl, $C_3$-$C_8$cycloalkoxy, $C_6$-$C_{10}$ aryl, $C_6$-$C_{10}$aryloxy, $C_7$-$C_{12}$aralkyl, $C_7$-$C_{12}$aralkoxy, $C_7$-$C_{12}$alkylaryl, or $C_7$-$C_{12}$alkylaryloxy, and where each n is independently 0, 1, 2, 3, or 4. The polysiloxane-polycarbonate copolymer also comprises polycarbonate blocks comprising structural units of the general formula (II) below:

wherein at least 60 percent of the total number of $R^1$ groups comprise aromatic moieties and the balance thereof comprise aliphatic, alicyclic, or aromatic moieties

According to exemplary non-limiting embodiments of the disclosure, the polycarbonate- polysiloxane block copolymer comprises diorganopolysiloxane blocks of the general formula (III) below:

wherein x represents an integer from about 20 to about 60. The polycarbonate blocks according to these embodiments can be derived from bisphenol-A monomers.

Diorganopolysiloxane blocks of formula (III) above can be derived from the corresponding dihydroxy compound of formula (IV):

wherein x is as described above. Compounds of this type and others are further described in U.S. Patent 4,746,701 to Kress, et al and US 8,017,697 to Carrillo. Compounds of this formula can be obtained by the reaction of the appropriate dihydroxyarylene compound with, for example, an alpha, omega-bisacetoxypolydiorangonosiloxane under phase transfer conditions.

Such dihydroxypolysiloxanes can be made by effecting a platinum catalyzed addition between a siloxane hydride of the formula (V):

wherein x is a previously defined, and an aliphatically unsaturated monohydric phenol such as eugenol to yield a compound of formula (IV).

The polycarbonate-polysiloxane copolymer may be manufactured by reaction of a diphenolic polysiloxane, such as that depicted by formula (IV), with a carbonate source and a dihydroxy aromatic compound such as bisphenol-A, optionally in the presence of a phase transfer catalyst as described above. Suitable conditions are similar to those useful in forming polycarbonates. For example, the copolymers can be prepared by phosgenation at temperatures from below 0°C to about 100°C, including for example, at temperatures from about 25°C to about 50°C. Since the reaction is exothermic, the rate of phosgene addition can be used to control the reaction temperature. The amount of phosgene required will generally depend upon the amount of the dihydric reactants. Alternatively, the polycarbonate-polysiloxane copolymers can be prepared by co-reacting, in a molten state, the dihydroxy monomers and a diaryl carbonate ester, such as diphenyl carbonate, in the presence of a transesterification catalyst as described above.

In the production of the polycarbonate-polysiloxane copolymer, the amount of dihydroxydiorganopolysiloxane can be selected so as to provide the desired amount of diorganopolysiloxane units in the copolymer. The particular amounts used will therefore be determined depending on desired physical properties of the composition, the value of x (for example, within the range of about 20 to about 60), and the type and relative amount of each component in the composition, including the type and amount of polycarbonate, type and amount of polycarbonate-polysiloxane copolymer, and type and amount of any other additives. Suitable amounts of dihydroxydiorganopolysiloxane can be determined by one of ordinary skill in the art without undue experimentation using the guidelines taught herein.

For example, according to embodiments of the disclosure, the polysiloxane-polycarbonate block copolymer can be provided having any desired level of siloxane content. For example, the siloxane content can be in the range of from 4 mole % to 30 mole %. In additional embodiments, the siloxane content of the polysiloxane-polycarbonate block copolymer can be in the range of from 4 mole % to 20 mole %. In still further embodiments, the siloxane content of the polysiloxane-polycarbonate block copolymer can be in the range of from 4 mole % to 8 mole %. In a further embodiment, the polysiloxane-polycarbonate copolymer comprises a diorganosiloxane content in the range of from 5 to 7 mole wt %. In an even further exemplary embodiment, the siloxane content of the polysiloxane-polycarbonate block copolymer can be about 6 mole %. Still further, the diorganopolysiloxane blocks can be randomly distributed in the polysiloxane-polycarbonate block copolymer.

The disclosed polysiloxane-polycarbonate block copolymers can also be end-capped as similarly described in connection with the manufacture of polycarbonates set forth herein. For example, according to embodiments of the disclosure, a polysiloxane-polycarbonate block copolymer can be end capped with p-cumyl-phenol.

A non-limiting example of a polycarbonate-siloxane copolymer includes transparent EXL, available from SABIC Innovative Plastics. The transparent EXL from SABIC is a polycarbonate-polysiloxane (9030T) copolymer, having been tested commercially and found to have about 6 mole % siloxane, a Mw of about 44,600, and a Mn of about 17800 in a polystyrene standard using chloroform solvent.

The polysiloxane polycarbonate copolymer component can be present in the polymer composition in any desired amount. For example, in embodiments of the disclosure, the polysiloxane polycarbonate copolymer is present in an amount of at least 10 weight percent relative to the total weight of the polymer composition. For example, the polycarbonate-polysiloxane copolymer can be present in an amount in the range of from 10 weight % to 90 weight % relative to the total weight of the polymer composition, including exemplary amounts of 15 weight %, 20 weight %, 25 weight %, 30 weight %, 35 weight %, 40 weight %, 45 weight %, 50 weight %, 55 weight %, 60 weight %, 65 weight %, 70 weight %, 75 weight %, 80 weight %, 85 weight %, and 90 weight %.. In still further embodiments, the polysiloxane polycarbonate copolymer can be present within any range of amounts derived from any two of the above stated values. For example, the polysiloxane polycarbonate copolymer can be present in an amount in the range of from about 10 weight % to about 20 weight %, or in an amount in the range of from about 60 weight % to about 90 weight %.

The disclosed polymer compositions further comprise a conventional laser direct structuring additive (LDS) additive. As used herein, a laser direct structuring additive refers to metal containing additives suitable for use in a laser direct structuring process. To that end, as discussed more fully herein, an LDS additive is selected such that, after activating with a laser, a conductive path can be formed by a subsequent standard metallization or plating process. As such, when the LDS additive is exposed to a laser, elemental metal is released or activated. The laser thus draws the circuit pattern onto the thermoplastic part and leaves behind a roughened surface containing embedded metal particles. These particles act as nuclei for the crystal growth during a subsequent metallization or plating process, such as a copper plating process or other plating processes, including gold plating, nickel plating, silver plating, zinc plating, tin plating or the like.

According to embodiments of the disclosure, the laser direct structuring additive can comprise one or more metal oxides, including for example, oxides of chromium, copper, or combinations thereof. These laser direct structuring additives can also be provided having spinel type crystal structures. In one embodiment, the laser direct structuring additive comprises a metal oxide, a copper salt, a metal oxide spinel, or a mixture of metal oxide spinels, or a combination thereof.

An exemplary and non-limiting example of a commercially available laser direct structuring additive includes PK3095 black pigment, commercially available from Ferro Corp., USA. The PK3095, for example, comprises chromium oxides ($Cr_2O_3$, $Cr_2O_4^{2-}$, $Cr_2O_7^{2-}$) and oxides of copper (CuO), as determined using XPS. The PK3095 black pigment also has a spinel type crystal structure. Another exemplary commercially available laser direct structuring additive is the Black 1G pigment black 28 commercially available from The Shepherd Color company. The Black 1G pigment black 28 comprises copper chromate and has a pH of about 7.3. The Black 1G pigment also has a spinel type crystal structure.

In one embodiment, the laser direct structuring additive can be present in the polymer composition in an amount in the range of from about 1 weight % to about 10 weight % relative to the total weight of the polymer composition, including for example, amounts of about 1 weight %, about 2 weight %, about 3 weight %, about 4 weight %, about 5 weight %, about 6 weight %, about 7 weight %, about 8 weight %, about 9 weight % and about 10 weight %. In still further embodiments, the laser direct structure (LDS) additive can be present in the polymer composition in an amount within any range of amounts derived from any two of the above stated values. For example, the laser direct structuring additive can be present in an amount of from 7 weight % to 10 weight % relative to the total weight of the polymer composition. Alternatively, the laser direct structuring additive can be present in the polymer composition in an amount in the range of from 9 weight % to 10 weight % relative to the total weight of the polymer composition. In an even further embodiment, the laser direct structuring additive can be present in the polymer composition in an amount of about 10 weight % relative to the total weight of the polymer composition.

The disclosed polymer compositions further comprise a reinforcing filler, such as, for example, an inorganic filler or reinforcing agent. The specific composition of a filler, can vary, provided that the filler is chemically compatible with the remaining components of the polymer composition. The polymer composition comprises a reinforcing filler comprising a glass reinforcement component.

In one embodiment, the glass reinforcement component comprises a glass fiber, flat glass, long glass, short glass, large diameter glass, small diameter glass, or nano glass, or a combination thereof. In another embodiment, the glass reinforcement component comprises E-glass, A-glass, C-glass, D-glass, R-glass, or S-glass, or a combination thereof. In a further embodiment, the E-glass comprises E-glass derivatives that are fluorine free and/or boron-free.

In one embodiment, the glass reinforcement component diameter ranges from 4 $\mu$m to 35 $\mu$m, including exemplary values of 5 $\mu$m, 6 $\mu$m, 8 $\mu$m, 10 $\mu$m, 12 $\mu$m, 14 $\mu$m, 16 $\mu$m, 18 $\mu$m, 20 $\mu$m, 22 $\mu$m, 24 $\mu$m, 26 $\mu$m, 28 $\mu$m, 30 $\mu$m, 32 $\mu$m, and 34 $\mu$m. In still further embodiments, the diameter can in a range derived from any two of the above stated values. For example, the diameter can range from 5 $\mu$m to 34 $\mu$m.

The reinforcing filler can be present in the polymer composition in an amount in the range of from greater than 0 weight % to about 60 weight % relative to the total weight of the polymer composition, including for example, amounts of about 5 weight %, about 10 weight %, about 15 weight %, about 20 weight %, about 25 weight %, about 30 weight %, about 35 weight %, about 40 weight %, about 45 weight %, about 50 weight %, about 55 weight %, and about 60 weight %. In still further embodiments, the reinforcing filler can be present in the polymer composition in an amount within any range of amounts derived from any two of the above stated values. For example, the reinforcing filler can be present in an amount of from 5 weight % to 30 weight % relative to the total weight of the polymer composition. Alternatively, the reinforcing filler can be present in the polymer composition in an amount in the range of from 35 weight % to 50 weight % relative to the total weight of the polymer composition. In an even further embodiment, the reinforcing filler can be present in the polymer composition in an amount of about 30 weight % relative to the total weight of the polymer composition.

The disclosed polymer compositions can optionally comprise one or more additives conventionally used in the manufacture of molded thermoplastic parts with the proviso that the optional additives do not adversely affect the desired properties of the resulting composition. Mixtures of optional additives can also be used. Such additives may be mixed at a suitable time during the mixing of the components for forming the composite mixture. For example, the disclosed polymer composition can further comprise at least one additive comprising a plasticizer, a stabilizer, an anti-static agent, a flame-retardant, an impact modifier, a colorant, an antioxidant, or a mold release agent, or a combination thereof. In one embodiment, the composition further comprises one or more optional additives selected from an antioxidant, flame retardant, and stabilizer.

Exemplary heat stabilizers include, for example, organophosphites such as triphenylphosphite, tris-(2,6-dimethylphenyl)phosphite, tris-(mixed mono-and dinonylphenyl)phosphite or the like; phosphonates such as dimethylbenzenephosphonate or the like, phosphates such as trimethyl phosphate, or the like, or combinations including at least one of the foregoing heat stabilizers. Heat stabilizers are generally used in amounts of from 0.01 to 0.5 parts by weight based on 100 parts by weight of the total composition, excluding any filler.

Exemplary antioxidants include, for example, organophosphites such as tris(nonyl phenyl)phosphite, tris(2,4-di-t-butylphenyl)phosphite, bis(2,4-di-t-butylphenyl)pentaerythritoldiphosphite, distearylpentaerythritoldiphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylatedthiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants are generally used in amounts of from 0.01 to 0.5 parts by weight, based on 100 parts by weight of the total composition, excluding any filler.

Exemplary light stabilizers include, for example, benzotriazoles such as 2-(2-hydroxy-5-methylphenyl)benzotriazole, 2-(2-hydroxy-5-tert-octylphenyl)-benzotriazo le and 2-hydroxy-4-n-octoxy benzophenone or the like or combinations including at least one of the foregoing light stabilizers. Light stabilizers are generally used in amounts of from 0.1 to 1.0 parts by weight, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from 0.5 to 3.0 parts by weight, based on 100 parts by weight of the total composition, excluding any filler.

Exemplary antistatic agents include, for example, glycerol monostearate, sodium stearylsulfonate, sodium dodecylbenzenesulfonate or the like, or combinations of the foregoing antistatic agents. In one embodiment, carbon fibers, carbon nanofibers, carbon nanotubes, carbon black, or any combination of the foregoing may be used in a polymeric resin containing chemical antistatic agents to render the composition electrostatically dissipative.

Exemplary mold releasing agents include for example, metal stearate, stearyl stearate, pentaerythritoltetrastearate, beeswax, montan wax, paraffin wax, or the like, or combinations including at least one of the foregoing mold release agents. Mold releasing agents are generally used in amounts of from 0.1 to 1.0 parts by weight, based on 100 parts by weight of the total composition, excluding any filler.

Exemplary UV absorbers include for example, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]-5-(octyloxy)-phenol (CYASORB™ 1164); 2,2'-(1,4-phenylene)bis(4H-3,1-benzoxazin-4-one) (CYASORB™ UV-3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 parts by weight to 3.0 parts by weight, based on 100 parts by weight of the total composition, excluding any filler.

Exemplary lubricants include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants are generally used in amounts of from 0.1 parts by weight to 5 parts by weight, based on 100 parts by weight of the total composition, excluding any filler.

Exemplary blowing agents include for example, low boiling halo hydrocarbons and those that generate carbon dioxide; blowing agents that are solid at room temperature and when heated to temperatures higher than their decomposition temperature, generate gases such as nitrogen, carbon dioxide, ammonia gas, such as azodicarbonamide, metal salts of azodicarbonamide, 4,4' oxybis(benzenesulfonylhydrazide), sodium bicarbonate, ammonium carbonate, or the like, or combinations including at least one of the foregoing blowing agents. Blowing agents are generally used in amounts of from 1 part by weight to 20 parts by weight, based on 100 parts by weight of the total composition, excluding any filler.

As noted above, the disclosed polymer compositions can optionally further comprises a flame retardant additive. In various embodiments, the flame retardant additive can comprise any flame retardant material or mixture of flame retardant materials suitable for use in the inventive polymer compositions. In another embodiment, the flame retardant additive comprises a phosphate containing material. In another embodiment, the flame retardant additive comprises a halogen containing material. In other embodiments, the flame retardant additive is free of, or substantially free of, one or more of phosphate and/or a halogen. In still another embodiment, the flame retardant additive comprises an oligomer organophosphorous flame retardant, including for example, bisphenol A diphenyl phosphate ("BPADP"). In a further embodiment, the flame retardant is selected from oligomeric phosphate, polymeric phosphate, oligomeric phosphonate, or mixed phosphate/phosphonate ester flame retardant compositions. In a still further embodiment, the flame retardant is selected from triphenyl phosphate; cresyldiphenylphosphate; tri(isopropylphenyl)phosphate; resorcinol bis(diphenylphosphate); and bisphenol-A bis(diphenyl phosphate). In a yet further embodiment, the flame retardant is bisphenol-A bis(diphenyl phosphate).

The concentration of a flame retardant additive can vary, and the present invention is not intended to be limited to any particular flame retardant concentration. In one embodiment, the disclosed composition can comprises from greater than 0 weight % to about 20 weight % of flame retardant additive, including for example, about 1 weight %, 2 weight %, 3 weight %, 4 weight %, 5 weight %, 6 weight %, 7 weight %, 8 weight %, 9 weight %, 10 weight %, 11 weight %, 12 weight %, 13 weight %, 14 weight %, 15 weight %, 16 weight %, 17 weight %, 18 weight %, or 19 weight %. In still further embodiments, the flame retardant additive can be present in any range of amounts derived from the above values. For example, the flame retardant additive can be present in the polycarbonate composition in an amount in the range of from about 5 weight % to about 15 weight %, or event from about 10 weight % to about 20 weight %. Flame retardant additives are commercially available, and one of skill in the art could readily select an appropriate flame retardant additive.

Additionally, materials to improve flow and other properties may be added to the composition, such as low molecular weight hydrocarbon resins. Particularly useful classes of low molecular weight hydrocarbon resins are those derived from petroleum $C_5$ to $C_9$ feedstock that are derived from unsaturated $C_5$ to $C_9$ monomers obtained from petroleum cracking. Non-limiting examples include olefins, e.g., pentenes, hexenes, heptenes and the like; diolefins, e.g., pentadienes, hexadienes and the like; cyclic olefins and diolefins, e.g., cyclopentene, cyclopentadiene, cyclohexene, cyclohexadiene, methyl cyclopentadiene and the like; cyclic diolefindienes, e.g., dicyclopentadiene, methylcyclopentadiene dimer and the like; and aromatic hydrocarbons, e.g., vinyltoluenes, indenes, methylindenes and the like. The resins can additionally be partially or fully hydrogenated.

In a further embodiment, the invention relates to a method for making a polymer composition, the method comprising forming a blended composition comprising a thermoplastic polymer, a laser direct structuring additive and a reinforcing filler.

In one embodiment, the laser direct structuring process involves three steps: 1) injection molding, 2) laser structuring, and 3) metallizing.

In a further embodiment, during the injection molding step, the laser direct structuring additive and reinforcing filler may be mixed with the thermoplastic polymer. In another embodiment, the blend composition further comprises one or more optional additives selected from an antioxidant, flame retardant, inorganic filler, and stabilizer. In a still further embodiment, single shot injection molding can be used to produce the parts or articles to be laser structured. In at least one embodiment, the polymer composition may be mixed at this step and used in the LDS process. In another embodiment, additional ingredients may be added to the polymer composition after this step.

As described herein, the present invention relates to blended polymer compositions. The blended polymer compositions of the present disclosure may be formed using any known method of combining multiple components to form a polymer resin. In one embodiment, the components are first blended in a high-speed mixer. Other low shear processes including but not limited to hand mixing may also accomplish this blending. The blend is then fed into the throat of a twin-screw extruder via a hopper. Alternatively, one or more of the components may be incorporated into the composition by feeding directly into the extruder at the throat and/or downstream through a sidestuffer. The extruder is generally operated at a temperature higher than that necessary to cause the composition to flow. The extrudate is immediately quenched in a water batch and pelletized. The pellets so prepared when cutting the extrudate may be one-fourth inch long or less as desired. Such pellets may be used for subsequent molding, shaping, or forming. In one embodiment, the blend composition is formed by twin screw extrusion.

In a further embodiment, during the laser structuring step, a laser is used to form a conductive path during the laser structuring step. In a still further embodiment, the laser used to form a conductive path is laser direct structuring. In a yet further embodiment, laser direct structuring comprises laser etching. In an even further embodiment, laser etching is carried out to provide an activated surface.

In a further embodiment, at least one laser beam draws at least one pattern on the surface of the polymer composition during the laser structuring step. In a still further embodiment, the employed filler composition may release at least one metallic nucleus. In a yet further embodiment, the at least one metallic nucleus that has been released may act as a catalyst for reductive copper plating process.

In a further embodiment, laser etching is carried out at about 1 Watt (W) to about 10 W power with a frequency from about 30 kilohertz (kHz) to about 110 kHz and a speed of about 1 meter per second (m/s) to about 5 m/s. In a still further embodiment, laser etching is carried out at about 1 w to about 10 W power with a frequency from about 40 kHz to about 100 kHz and a speed of about 2 m/s to about 4 m/s. In a yet further embodiment, laser etching is carried out at about 3.5 W power with a frequency of about 40 kHz and a speed of about 2 m/s.

In a further embodiment, a rough surface may form in the LDS process. In a still further embodiment, the rough surface may entangle the copper plate with the polymer matrix in the polymer composition, which may provide adhesion between the copper plate and the polymer composition.

The metalizing step can, in various embodiments, be performed using conventional techniques. For example, in one embodiment, an electroless copper plating bath is used during the metallization step in the LDS process. Thus, in various embodiments, plating a metal layer onto a conductive path is metallization. In a still further embodiment, metallization can comprise the steps: a) cleaning the etched surface; b) additive build-up of tracks; and c) plating.

Shaped, formed, or molded articles including the polymer compositions are also provided. The polymer compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, RFID applications, automotive applications, and the like.

The blended polymer compositions, or compounds, disclosed herein provide robust plating performance while maintaining good mechanical properties. Evaluation of the mechanical properties can be performed through various tests, such as Izod test, Charpy test, Gardner test, etc., according to several standards (e.g., ASTM D256). Robustness of plating performance can be measured via a performance ranking, or plating ranking, ranging from top performance (e.g., "best") to bottom performance. The ranking can be partitioned in various levels. In one embodiment, a plating ranking can have a level of "10" for top performance and a level of "0" for bottom performance.

In a further embodiment, the method comprises forming a molded part from the formed blend composition. In another embodiment, the method further comprises subjecting the molded part to a laser direct structuring process.

In one embodiment, the molded article formed from the composition exhibits ductile failure mode according to ASTM D256-2010.

In one embodiment, the article comprises the product of extrusion molding or injection molding a composition comprising a thermoplastic polymer, a laser directing structuring additive, and a reinforcing filler.

In a further embodiment, the molded article further comprises a conductive path formed by activation with a laser. In a yet further embodiment, the article further comprises a metal layer plated onto the conductive path. In an even further embodiment, the metal layer is a copper layer. In a still further embodiment, the metal layer has a thickness of about 0.8 micrometers or higher as measured according to ASTM B568.

In various embodiments, the polymer composition may be used in the field of electronics. In a further embodiment, non-limiting examples of fields which may use 3D MIDs, LDS process, or polymer composition include electrical, electro-mechanical, Radio Frequency (RF) technology, telecommunication, automotive, aviation, medical, sensor, military, and security. In a still further embodiment, the use of 3D MIDs, LDS processes, or polymer compositions may also be present in overlapping fields, for example in mechatronic systems that integrate mechanical and electrical properties which may, for example, be used in automotive or medical engineering.

In one embodiment, molded articles according to the present invention can be used to produce a device in one or more of the foregoing fields. In a still further embodiment, non-limiting examples of such devices in these fields which may use 3D MIDs, LDS processes, or polymer compositions according to the present invention include a computer device, a household appliance, a decoration device, an electromagnetic interference device, a printed circuit, a Wi-Fi device, a Bluetooth device, a GPS device, a cellular antenna device, a smart phone device, an automotive device, a military device, an aerospace device, a medical device, a hearing aid, a sensor device, a security device, a shielding device, a RF antenna device, or a RFID device.

In a still further embodiment, the molded articles can be used to manufacture devices in the automotive field. In a further embodiment, non-limiting examples of such devices in the automotive field which may use 3D MIDs, LDS processes, or the disclosed polymer compositions in the vehicle's interior include adaptive cruise control, headlight sensors, windshield wiper sensors, and door/window switches. In a further embodiment, non-limiting examples of devices in the automotive field which may use 3D MIDs, LDS process, or the disclosed polymer compositions in the vehicle's exterior include pressure and flow sensors for engine management, air conditioning, crash detection, and exterior lighting fixtures.

Plastic plating was developed for industrial application because of the low cost, the ability to mold large and complex parts, and the reduction of weight. Plastic plating also allows the rapid development of new designs and reduced space requirements in both production and the devices themselves. As gasoline prices rise, consumers have become more interested in automotive weight reduction. Non-limiting examples of plastic materials which may be plated include acrylonitrile butadiene styrene ("ABS"), polypropylene, polysulfone, polyethersulfone, polyetherimide, Teflon, polyarylether, polycarbonate, polyphenylene oxide, polyacetal. The LDS process may be used for plastic plating and the plastic material may be included in the polymer composition or in the polymer matrix of the polymer composition.

In one embodiment, the molded articles may have a thickness ranging from 1.2 mm to 2.0 mm. For example, the molded article may have a thickness of 1.6 mm. In further embodiment, the molded article may have a thickness ranging from 2.8 to 3.5 mm. For example, the molded article may have a thickness of 3.2 mm.

In a further embodiment, the resulting disclosed compositions can be used to provide any desired shaped, formed, or molded articles. For example, the disclosed compositions may be molded into useful shaped articles by a variety of means such as injection molding, extrusion, rotational molding, blow molding and thermoforming. As noted above, the disclosed compositions are particularly well suited for use in the manufacture of electronic components and devices. As such, according to some embodiments, the disclosed compositions can be used to form articles such as printed circuit board carriers, burn in test sockets, flex brackets for hard disk drives, and the like.

The disclosed methods include at least the following embodiments.

Embodiment 1: A polymer composition comprising:

a. a thermoplastic polymer, wherein the thermoplastic polymer comprises polycarbonate, polycarbonate-polysiloxane copolymer, ethylene vinyl acetate, ethylene vinyl alcohol, polyoxymethylene, polyacrylate, polyacrylonitrile, polyamide-imide, polyetherketone, polycaprolactone, polyhydroxyalkanoate, polyimide, polyketone, polylactic acid, polyurethane, or polyvinyl acetate or a combination thereof;
b. a laser direct structuring additive; and

c. a glass reinforcement component present in an amount ranging from greater than 0% by weight to no greater than 60% by weight based on the total weight of the composition;

wherein the polymer composition is capable of being plated after being activated using a laser;

wherein the flexural modulus is greater than 3 GPa as measured according to ASTM D790 and the tensile modulus is greater than 3 GPa as measured according to ASTM D638.

Embodiment 2: The polymer composition of embodiment 1, wherein the thermoplastic polymer is present in an amount ranging from 10% by weight to 90% by weight based on the total weight of the composition.

Embodiment 3: The polymer composition of any of embodiments 1-2, wherein the thermoplastic polymer is present in an amount ranging from 10 wt % to 90 wt % based on the total weight of the composition, the glass reinforcement component is present in an amount ranging from greater than 0 wt % to 60 wt % based on the total weight of the composition, and the laser direct structuring additive is present in an amount ranging from about 1 wt % to 10 wt % based on the total weight of the composition.

Embodiment 4: The polymer composition of any of embodiments 1-3, wherein the thermoplastic polymer comprises polycarbonate.

Embodiment 5: The polymer composition of any of embodiments 1-4, wherein the laser direct structuring additive comprises a metal oxide, a copper salt, a metal oxide spinel, or a mixture of metal oxide spinels, or a combination thereof.

Embodiment 6: The polymer composition of any of embodiments 1-5, wherein the laser direct structuring additive is present in an amount from 1% by weight to 10% by weight based on the total weight of the composition

Embodiment 7: The polymer composition of any of embodiments 1-6, wherein the glass reinforcement component comprises a glass fiber, a flat glass, a long glass, a short glass, a large diameter glass, a small diameter glass, or a nano glass, or a combination thereof.

Embodiment 8: The polymer composition of any of embodiments 1-7, wherein the tensile modulus, flexural modulus, and/or plating index increase with an increasing concentration of glass reinforcement component.

Embodiment 9: The polymer composition of any of embodiments 1-8 further comprising at least one additive comprising plasticizer, stabilizer, anti-static agent, flame-retardant, impact modifier, colorant, antioxidant, or mold release agent, or a combination thereof.

Embodiment 10: A method for making a polymer composition comprising forming a blend composition comprising:

a. a thermoplastic polymer, wherein the thermoplastic polymer comprises polycarbonate, polycarbonate-polysiloxane copolymer, ethylene vinyl acetate, ethylene vinyl alcohol, polyoxymethylene, polyacrylate, polyacrylonitrile, polyamide-imide, polyetherketone, polycaprolactone, polyhydroxyalkanoate, polyimide, polyketone, polylactic acid, polyurethane, or polyvinyl acetate or a combination thereof;

b. a laser direct structuring additive; and

c. a glass reinforcement component present in an amount ranging from greater than 0% by weight to no greater than 60% by weight based on the total weight of the composition;

wherein the polymer composition is capable of being plated after being activated using a laser;

wherein the flexural modulus is greater than 3 GPa as measured according to ASTM D790 and the tensile modulus is greater than 3 GPa as measured according to ASTM D638.

Embodiment 11: The method of embodiment 10, wherein the blend composition further comprises a plasticizer, stabilizer, anti-static agent, flame-retardant, impact modifier, colorant, antioxidant, or mold release agent or a combination thereof.

Embodiment 12: The method of any of embodiments 10-11, wherein the blend composition is formed by twin screw extrusion.

Embodiment 13: An article of manufacture comprising the polymer composition of any of embodiments 1-9.

Embodiment 14: The article manufacture of embodiment 13, wherein the article comprises a computer device, a household appliance, a decoration device, an electromagnetic interference device, a printed circuit, a Wi-Fi device, a Bluetooth device, a GPS device, a cellular antenna device, a smart phone device, an automotive device, a military device, an aerospace device, a medical device, a hearing aid, a sensor device, a security device, a shielding device, a RF antenna device, or a RFID device.

EXAMPLES

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Efforts have been made to ensure accuracy with respect to numbers (*e.g.*, amounts, temperature, etc.), but some errors and deviations should be accounted for. Unless indicated otherwise, parts are parts by weight, temperature is in degrees Celsius (°C) or is at ambient temperature, and pressure is at or near atmospheric.

COMPOUNDING PROFILE

Table 1 illustrates the compounding profile and equipment set up for glass filled PC LDS.

Table 1

| Parameters | Unit | Glass filled, LDS capable polycarbonate |
|---|---|---|
| Compounder Type | NONE | TEM-37BS |
| Barrel Size | mm | 1500 |
| Die | mm | 3 |
| Feed (Zone 0) Temp | NONE | 50 |
| Zone 1 Temp | °C | 100 |
| Zone 2 Temp | °C | 150 |
| Zone 3 Temp | °C | 200 |
| Zone 4 Temp | °C | 255 |
| Zone 5 Temp | °C | 255 |
| Zone 6 Temp | °C | 255 |
| Zone 7 Temp | °C | 255 |
| Zone 8 Temp | °C | 255 |
| Zone 9 Temp | °C | 260 |
| Zone 10 Temp | °C | 260 |
| Zone 11 Temp | °C | 260 |
| Die Temp | °C | 265 |
| Screw speed | rpm | 300 |
| Throughput | kg/hr | 40 |
| Torque | NONE | 70 |
| Vacuum 1 | MPa | -0.08 |
| Side Feeder 1 speed | rpm | >200 |
| Melt temperature | NONE | 275 |

Table 2 illustrates the molding profile and equipment set up for glass filled PC LDS.

Table 2

| Parameters | Unit | Glass filled, LDS capable polycarbonate |
|---|---|---|
| Cnd: Pre-drying time | Hour | 3 |
| Cnd: Pre-drying temp | °C | 110 |
| Molding Machine | NONE | FANUC |
| Mold Type (insert) | NONE | ASTM tensile, flexual, Izod, colorchip |
| Hopper temp | °C | 50 |
| Zone 1 temp | °C | 270 |

(continued)

| Parameters | Unit | Glass filled, LDS capable polycarbonate |
|---|---|---|
| Zone 2 temp | °C | 275 |
| Zone 3 temp | °C | 280 |
| Nozzle temp | °C | 275 |
| Mold temp | °C | 100 |
| Screw speed | rpm | 100 |
| Back pressure | kgf/cm$^2$ | 30 |
| Cooling time | s | 15 |
| Injection speed | mm/s | 50 |
| Holding pressure | kgf/cm$^2$ | 800 |
| Max. Injection pressure | kgf/cm$^2$ | 1000 |

FORMULATION AND PERFORMANCE COMPARISON OF GLASS FILLED, LDS ADDITIVE CONTAINED, POLYCARBONATE COMPOSITES

Table 3 illustrates the formulation and performance comparison of the polymer composition comprising a polycarbonate, a LDS additive, and a 0-50wt % glass reinforcement filler. It is shown that as the glass fiber added, the flexural modulus increases from 2110 MPa to 3340 MPa, the tensile modulus increases from 2134 MPa to 3956 MPa, and the average plating index ("PI") increases from 0.30 to 0.91. Furthermore as the glass loading increases, the flexural modulus increases from 3340 MPa to 13100 MPa, the tensile modulus increases from 3956 MPa to 15310 MPa, and the average plating index increases from 0.91 to 1.10. Table 4 shows the LDS plating performance comparison of the polymer composition comprising a polycarbonate, a LDS additive, and a 0-50wt % glass reinforcement filler. The plating effect of the glass reinforcement filled material is significantly better than unfilled material across a wide range of laser parameters, and the plating effect shows a general increase as glass loading increases across varieties of laser parameters.

Table 3

| Item Code | | Item Description | Unit | 0GF | 10GF | 20GF | 30GF | 40GF | 50GF |
|---|---|---|---|---|---|---|---|---|---|
| C914089/C914090 | | PC | % | 91 | 81 | 71 | 61 | 51 | 41 |
| F593895 | | LDS additive | % | 3 | 3 | 3 | 3 | 3 | 3 |
| F232 | | Acrylic polymer impact moc | % | 5 | 5 | 5 | 5 | 5 | 5 |
| G512972 | | Flat glass fiber | % | | 10 | 20 | 30 | 40 | 50 |
| F542, F538, F527, | F722236, F8260, F4520 | Additives | % | 1 | 1 | 1 | 1 | 1 | 1 |
| Typical Property | Test Method | Test Description | Unit | 0GF | 10GF | 20GF | 30GF | 40GF | 50GF |
| ASH | ASTM D 5630 | 2.0g, 900°C, >20 minutes. | % | 3.1 | 13.1 | 22.9 | 32.6 | 42.6 | 52.4 |
| HDT | ASTM D 648 | 0.45MPa/3.2mm | °C | 117 | 126 | 126 | 126 | 124 | 125 |
| Flexual Modulus | ASTMD790 | 3.2mm, 1.27mm/min | MPa | 2110 | 3340 | 5710 | 7200 | 9440 | 13100 |
| Flexual Strength | ASTM D 790 | yield, 3.2mm, 1.27mm/min | MPa | 82 | 116 | 149 | 167 | 183 | 201 |
| Tensile Modulus | ASTM D 638 | 5mm/min | MPa | 2134 | 3956 | 6261 | 8789 | 11052 | 15310 |
| Tensile Strength | ASTM D 638 | break, 5mm/min | MPa | 41 | 67 | 94 | 109 | 124 | 145 |
| Tensile Elongation | ASTM D 638 | break, 5mm/min | % | 45.6 | 3.6 | 2.6 | 2.3 | 2.2 | 1.9 |
| Notched IZOD | ASTM D256 | 23°C, 2lbf/ft | J/m | 621 | 142 | 163 | 156 | 146 | 120 |
| Unnotched IZOD | ASTM D256 | 23°C, 5lbf/ft | J/m | 2140 | 738 | 735 | 671 | 561 | 466 |
| PI | Average | | | 0.30 | 0.91 | 0.94 | 1.06 | 1.14 | 1.10 |

Table 4

| Power, w | Frequency, kHz | Speed, m/s | 0GF | 10GF | 20GF | 30GF | 40GF | 50GF |
|---|---|---|---|---|---|---|---|---|
| 10 | 100 | 2 | 0.63 | 1.24 | 1.27 | 1.34 | 1.48 | 1.49 |
| 10 | 70 | 2 | 1.07 | 1.27 | 1.30 | 1.40 | 1.53 | 1.62 |
| 10 | 40 | 2 | 1.34 | 1.28 | 1.41 | 1.49 | 1.65 | 1.77 |
| 2 | 100 | 2 | 0.00 | 0.01 | 0.02 | 0.03 | 0.03 | 0.02 |
| 2 | 70 | 2 | 0.00 | 0.12 | 0.19 | 0.37 | 0.32 | 0.27 |
| 2 | 40 | 2 | 0.01 | 0.86 | 0.92 | 1.03 | 1.10 | 1.00 |
| 7 | 80 | 4 | 0.02 | 1.08 | 1.13 | 1.24 | 1.35 | 1.23 |
| 5 | 80 | 4 | 0.01 | 0.56 | 0.47 | 0.93 | 0.81 | 0.72 |
| 3 | 80 | 4 | 0.00 | 0.03 | 0.09 | 0.18 | 0.15 | 0.12 |
| 3 | 100 | 2 | 0.00 | 0.18 | 0.24 | 0.47 | 0.41 | 0.34 |
| 3 | 70 | 2 | 0.01 | 0.70 | 0.78 | 0.93 | 0.97 | 0.87 |
| 3 | 40 | 2 | 0.06 | 1.08 | 1.14 | 1.25 | 1.36 | 1.25 |
| 5 | 100 | 4 | 0.00 | 0.45 | 0.51 | 0.63 | 0.65 | 0.58 |
| 3 | 100 | 4 | 0.00 | 0.01 | 0.01 | 0.01 | 0.01 | 0.01 |
| 9 | 80 | 4 | 0.17 | 1.24 | 1.32 | 1.47 | 1.59 | 1.48 |
| 5 | 100 | 2 | 0.02 | 1.25 | 1.29 | 1.37 | 1.51 | 1.39 |
| 5 | 70 | 2 | 0.14 | 1.33 | 1.36 | 1.44 | 1.60 | 1.49 |
| 5 | 40 | 2 | 0.73 | 1.44 | 1.46 | 1.48 | 1.67 | 1.69 |
| 11 | 100 | 4 | 0.31 | 1.36 | 1.38 | 1.41 | 1.58 | 1.52 |
| 9 | 100 | 4 | 0.05 | 1.24 | 1.29 | 1.40 | 1.53 | 1.41 |
| 7 | 100 | 4 | 0.01 | 1.06 | 1.11 | 1.23 | 1.33 | 1.22 |
| 8 | 100 | 2 | 0.67 | 1.28 | 1.31 | 1.36 | 1.52 | 1.53 |
| 8 | 70 | 2 | 0.92 | 1.32 | 1.30 | 1.40 | 1.53 | 1.60 |
| 8 | 40 | 2 | 1.05 | 1.36 | 1.27 | 1.49 | 1.58 | 1.67 |
| Average PI | | | 0.30 | 0.91 | 0.94 | 1.06 | 1.14 | 1.10 |

Example of glass filled polyamide ("PA") - Comparative example (out of the scope of the present invention)

Table 5 illustrates the compounding profile and equipment set up for glass filled PA LDS.

Table 5

| Parameters | Unit | Glass filled, LDS capable polyamide |
|---|---|---|
| Compounder Type | NONE | TEM-37BS |
| Barrel Size | mm | 1500 |
| Die | mm | 3 |
| Feed (Zone 0) Temp | NONE | 50 |
| Zone 1 Temp | °C | 100 |
| Zone 2 Temp | °C | 150 |
| Zone 3 Temp | °C | 200 |

(continued)

| Parameters | Unit | Glass filled, LDS capable polyamide |
|---|---|---|
| Zone 4 Temp | °C | 255 |
| Zone 5 Temp | °C | 255 |
| Zone 6 Temp | °C | 255 |
| Zone 7 Temp | °C | 255 |
| Zone 8 Temp | °C | 255 |
| Zone 9 Temp | °C | 255 |
| Zone 10 Temp | °C | 255 |
| Zone 11 Temp | °C | 255 |
| Die Temp | °C | 260 |
| Screw speed | rpm | 350 |
| Throughput | kg/hr | 50 |
| Torque | NONE | 65 |
| Vacuum 1 | MPa | -0.08 |
| Side Feeder 1 speed | rpm | 300 |
| Melt temperature | NONE | 260 |

Table 6 illustrates the molding profile and equipment set up for glass filled PA LDS.

Table 6

| Parameters | Unit | Glass filled, LDS capable polyamide |
|---|---|---|
| Cnd: Pre-drying time | Hour | 4 |
| Cnd: Pre-drying temp | °C | 120 |
| Molding Machine | NONE | FANUC |
| Mold Type (insert) | NONE | ASTM tensile, flexual, Izod, colorchip |
| Hopper temp | °C | 50 |
| Zone 1 temp | °C | 270-280 |
| Zone 2 temp | °C | 275-285 |
| Zone 3 temp | °C | 280-300 |
| Nozzle temp | °C | 280-300 |
| Mold temp | °C | 80-120 |
| Screw speed | rpm | 100 |
| Back pressure | kgf/cm$^2$ | 30-50 |
| Cooling time | s | 15 |
| Injection speed | mm/s | 50-150 |
| Holding pressure | kgf/cm$^2$ | 600-800 |
| Max. Injection pressure | kgf/cm$^2$ | 1000 |

Table 7 illustrates the formulation and performance comparison of the polymer composition comprising a polyamide, a LDS additive, and a 0-50wt% glass reinforcement filler. It is shown that as the glass fiber added, the flexural modulus increases from 2510 MPa to 4170 MPa, the tensile modulus increases from 3116 MPa to 5181 MPa, and the average plating index has a significant increase from 0.35 to 0.64. Furthermore as the glass fiber loading increases from 10wt% to 50wt%, the flexural modulus increases from 4170 MPa to 13900 MPa, the tensile modulus increases form 5181 MPa to 16635 MPa, and the average plating index increases from 0.64 to 0.81.

Table 7

| Item Code | | Item Description | Unit | 0GF | 10GF | 30GF | 40GF | 50GF |
|---|---|---|---|---|---|---|---|---|
| 83404 | | PA66 | % | 96 | 86 | 66 | 56 | 46 |
| F593895 | | LDS additive | % | 3 | 3 | 3 | 3 | 3 |
| G512950 | | Flat glass fiber | % | | 10 | 30 | 40 | 50 |
| F542, 25808, F0013187 | | Additives | | 1 | 1 | 1 | 1 | 1 |
| Typical Property | Test Method | Test Description | Unit | 0GF | 10GF | 30GF | 40GF | 50GF |
| ASH | ASTM D 5630 | 2.0g, 900°C, >20 minutes. | % | 2.1 | 12.0 | 29.9 | 37.0 | 43.6 |
| HDT 0.45MPa | ASTM D 648 | 0.45MPa/3.2mm | °C | 236 | 255 | 259 | 260 | 260 |
| HDT 1.82MPa | ASTM D 648 | 1.82MPa/3.2mm | °C | 78 | 243 | 250 | 252 | 254 |
| Flexual Modulus | ASTM D 790 | 3.2mm, 1.27mm/min | MPa | 2510 | 4170 | 8340 | 10600 | 13900 |
| Flexual Strength | ASTM D 790 | yield, 3.2mm, 1.27mm/min | MPa | 104 | 134 | 230 | 275 | 317 |
| Tensile Modulus | ASTM D 638 | 5mm/min | MPa | 3116 | 5181 | 9868 | 13224 | 16635 |
| Tensile Strength | ASTM D 638 | break, 5mm/min | MPa | 76 | 94 | 160 | 194 | 215 |
| Tensile Elongation | ASTM D 638 | break, 5mm/min | % | 3.9 | 2.3 | 2.8 | 2.7 | 2.7 |
| Notched IZOD | ASTM D256 | 23°C, 2lbf/ft | J/m | 55 | 33 | 94 | 125 | 138 |
| Unnotched IZOD | ASTM D256 | 23°C, 5lbf/ft | J/m | 1020 | 370 | 697 | 974 | 1100 |
| Dk | 1.1GHz | | | 3.073 | 3.233 | 3.580 | 3.853 | 4.113 |
| Df | 1.1GHz | | | 0.013 | 0.012 | 0.012 | 0.011 | 0.011 |
| PI | Average | | | 0.35 | 0.64 | 0.80 | 0.83 | 0.81 |

**Claims**

1. A polymer composition comprising:

   a. a thermoplastic polymer, wherein the thermoplastic polymer comprises polycarbonate, polycarbonate-polysiloxane copolymer, ethylene vinyl acetate, ethylene vinyl alcohol, polyoxymethylene, polyacrylate, polyacrylonitrile, polyamide-imide, polyetherketone, polycaprolactone, polyhydroxyalkanoate, polyimide, polyketone, polylactic acid, polyurethane, or polyvinyl acetate or a combination thereof;
   b. a laser direct structuring additive; and
   c. a glass reinforcement component present in an amount ranging from greater than 0% by weight to no greater than 60% by weight based on the total weight of the composition;

   wherein the polymer composition is capable of being plated after being activated using a laser; and
   wherein the polymer composition has a flexural modulus of greater than 3 GPa as measured according to ASTM D790 and a tensile modulus of greater than 3 GPa as measured according to ASTM D638.

2. The polymer composition of Claim 1, wherein the thermoplastic polymer is present in an amount ranging from 10% by weight to 90% by weight based on the total weight of the composition.

3. The polymer composition of any of Claims 1-2, wherein the thermoplastic polymer is present in an amount ranging from 10% by weight to 90% by weight based on the total weight of the composition, the glass reinforcement component is present in an amount ranging from greater than 0% by weight to 60% by weight based on the total weight of the composition, and the laser direct structuring additive is present in an amount ranging from 1% by weight to 10% by weight based on the total weight of the composition.

4. The polymer composition of any of Claims 1-3, wherein the thermoplastic polymer comprises a polycarbonate.

5. The polymer composition of any of Claims 1-4, wherein the laser direct structuring additive comprises a metal oxide, a copper salt, a metal oxide spinel, or a mixture of metal oxide spinels, or a combination thereof.

6. The polymer composition of any of Claims 1-5, wherein the laser direct structuring additive is present in an amount from 1% by weight to 10% by weight based on the total weight of the composition.

7. The polymer composition of any of Claims 1-6, wherein the glass reinforcement component comprises a glass fiber, a flat glass, a long glass, a short glass, a large diameter glass, a small diameter glass, or a nano glass, or a combination thereof.

8. The polymer composition of any of Claims 1-7, wherein the polymer composition has one or more of a tensile modulus, a flexural modulus, and a plating index that increase with an increasing concentration of the glass component.

9. The polymer composition of any of Claims 1-8, further comprising at least one additive comprising a plasticizer, a stabilizer, an anti-static agent, a flame-retardant, an impact modifier, a colorant, an antioxidant, or a mold release agent, or a combination thereof.

10. A method for making a polymer composition according to claim 1 comprising forming a blend composition comprising:

a. a thermoplastic polymer, wherein the thermoplastic polymer comprises polycarbonate, polycarbonate-polysiloxane copolymer, ethylene vinyl acetate, ethylene vinyl alcohol, polyoxymethylene, polyacrylate, polyacrylonitrile, polyamide-imide, polyetherketone, polycaprolactone, polyhydroxyalkanoate, polyimide, polyketone, polylactic acid, polyurethane, or polyvinyl acetate or a combination thereof;
b. a laser direct structuring additive; and
c. a glass reinforcement component present in an amount ranging from greater than 0% by weight to no greater than 60% by weight based on the total weight of the composition;

wherein the polymer composition is capable of being plated after being activated using a laser; and
wherein the blend composition has a flexural modulus of greater than 3 GPa as measured according to ASTM D790 and a tensile modulus of greater than 3 GPa as measured according to ASTM D638.

11. The method of Claim 10, wherein the blend composition further comprises a plasticizer, a stabilizer, an anti-static agent, a flame-retardant, an impact modifier, a colorant, an antioxidant, or a mold release agent, or a combination thereof.

12. The method of any of Claims 10-11, wherein the blend composition is formed by twin screw extrusion.

13. An article of manufacture comprising the polymer composition of any of Claims 1-9.

14. The article manufacture of Claim 13, wherein the article comprises a computer device, a household appliance, a decoration device, an electromagnetic interference device, a printed circuit, a Wi-Fi device, a Bluetooth device, a GPS device, a cellular antenna device, a smart phone device, an automotive device, a military device, an aerospace device, a medical device, a hearing aid, a sensor device, a security device, a shielding device, an RF antenna device, or an RFID device.

**Patentansprüche**

1. Polymerzusammensetzung, umfassend:

a. ein thermoplastisches Polymer, wobei das thermoplastische Polymer Polycarbonat, Polycarbonat-Polysiloxan-Copolymer, Ethylenvinylacetat, Ethylenvinylalkohol, Polyoxymethylen, Polyacrylat, Polyacrylnitril, Polyamidimid, Polyetherketon, Polycaprolacton, Polyhydroxyalkanoat, Polyimid, Polyketon, Polymilchsäure, Polyurethan oder Polyvinylacetat oder eine Kombination davon umfasst;

b. einen Laserdirektstrukturierungszusatzstoff; und

c. einen Verstärkungsbestandteil aus Glas, der in einer Menge im Bereich von mehr als 0 Gewichts-% bis nicht mehr als 60 Gewichts-%, bezogen auf das Gesamtgewicht der Zusammensetzung, vorliegt;

wobei die Polymerzusammensetzung in der Lage ist, nach dem Aktivieren unter Verwendung eines Lasers plattiert zu werden; und

wobei die Polymerzusammensetzung einen Elastizitätsmodul von mehr als 3 GPa, wie gemäß ASTM D790 gemessen, und einen Zugmodul von mehr als 3 GPa, wie gemäß ASTM D638 gemessen, aufweist.

2. Polymerzusammensetzung gemäß Anspruch 1, wobei das thermoplastische Polymer in einer Menge im Bereich von 10 Gewichts-% bis 90 Gewichts-%, bezogen auf das Gesamtgewicht der Zusammensetzung, vorliegt.

3. Polymerzusammensetzung gemäß einem der Ansprüche 1-2, wobei das thermoplastische Polymer in einer Menge im Bereich von 10 Gewichts-% bis 90 Gewichts-%, bezogen auf das Gesamtgewicht der Zusammensetzung, vorliegt, der Verstärkungsbestandteil aus Glas in einer Menge im Bereich von mehr als 0 Gewichts-% bis 60 Gewichts-%, bezogen auf das Gesamtgewicht der Zusammensetzung, vorliegt, und der Laserdirektstrukturierungszusatzstoff in einer Menge im Bereich von 1 Gewichts-% bis 10 Gewichts-%, bezogen auf das Gesamtgewicht der Zusammensetzung, vorliegt.

4. Polymerzusammensetzung gemäß einem der Ansprüche 1-3, wobei das thermoplastische Polymer ein Polycarbonat umfasst.

5. Polymerzusammensetzung gemäß einem der Ansprüche 1-4, wobei der Laserdirektstrukturierungszusatzstoff ein Metalloxid, ein Kupfersalz, einen Metalloxidspinell oder eine Mischung aus Metalloxidspinellen oder eine Kombination davon umfasst.

6. Polymerzusammensetzung gemäß einem der Ansprüche 1-5, wobei der Laserdirektstrukturierungszusatzstoff in einer Menge im Bereich von 1 Gewichts-% bis 10 Gewichts-%, bezogen auf das Gesamtgewicht der Zusammensetzung, vorliegt.

7. Polymerzusammensetzung gemäß einem der Ansprüche 1-6, wobei der Verstärkungsbestandteil aus Glas eine Glasfaser, ein Flachglas, ein Langglas, ein Kurzglas, ein Glas mit großem Durchmesser, ein Glas mit kleinem Durchmesser oder ein Nanoglas oder eine Kombination davon umfasst.

8. Polymerzusammensetzung gemäß einem der Ansprüche 1-7, wobei die Polymerzusammensetzung einen oder mehrere von einem Zugmodul, einem Elastizitätsmodul und einem Plattierungsindex aufweist, die mit einer steigenden Konzentration des Glasbestandteils ansteigen, aufweist.

9. Polymerzusammensetzung gemäß einem der Ansprüche 1-8, ferner umfassend mindestens einen Zusatzstoff, umfassend einen Weichmacher, einen Stabilisator, ein Antistatikmittel, ein Flammschutzmittel, einen Schlagzähmodifizierer, einen Farbstoff, ein Antioxidationsmittel oder ein Formtrennmittel oder eine Kombination davon.

10. Verfahren zum Herstellen einer Polymerzusammensetzung gemäß Anspruch 1, umfassend das Bilden einer Mischungszusammensetzung, umfassend:

a. ein thermoplastisches Polymer, wobei das thermoplastische Polymer Polycarbonat, Polycarbonat-Polysiloxan-Copolymer, Ethylenvinylacetat, Ethylenvinylalkohol, Polyoxymethylen, Polyacrylat, Polyacrylnitril, Polyamidimid, Polyetherketon, Polycaprolacton, Polyhydroxyalkanoat, Polyimid, Polyketon, Polymilchsäure, Polyurethan oder Polyvinylacetat oder eine Kombination davon umfasst;

b. einen Laserdirektstrukturierungszusatzstoff; und

c. einen Verstärkungsbestandteil aus Glas, der in einer Menge im Bereich von mehr als 0 Gewichts-% bis nicht mehr als 60 Gewichts-%, bezogen auf das Gesamtgewicht der Zusammensetzung, vorliegt;

wobei die Polymerzusammensetzung in der Lage ist, nach dem Aktivieren unter Verwendung eines Lasers plattiert zu werden; und

wobei die Mischungszusammensetzung einen Elastizitätsmodul von mehr als 3 GPa, wie gemäß ASTM D790 gemessen, und einen Zugmodul von mehr als 3 GPa, wie gemäß ASTM D638 gemessen, aufweist.

11. Verfahren gemäß Anspruch 10, wobei die Mischungszusammensetzung ferner einen Weichmacher, einen Stabilisator, ein Antistatikmittel, ein Flammschutzmittel, einen Schlagzähmodifizierer, einen Farbstoff, ein Antioxidationsmittel oder ein Formtrennmittel oder eine Kombination davon umfasst.

12. Verfahren gemäß einem der Ansprüche 10-11, wobei die Mischungszusammensetzung durch Doppelschneckenextrusion gebildet wird.

13. Fertigungsartikel, umfassend die Polymerzusammensetzung gemäß einem der Ansprüche 1-9.

14. Fertigungsgegenstand gemäß Anspruch 13, wobei der Gegenstand eine Computervorrichtung, ein Haushaltsgerät, eine Dekorationsvorrichtung, eine Vorrichtung für elektromagnetische Interferenz, eine Leiterplatte, eine Wi-Fi-Vorrichtung, eine Bluetoothvorrichtung, eine GPS-Vorrichtung, eine Funkantennenvorrichtung, eine Smartphonevorrichtung, eine Automobilvorrichtung, eine Militärvorrichtung, eine Raumfahrtvorrichtung, eine Medizinvorrichtung, ein Gehörhilfsmittel, eine Sensorvorrichtung, eine Sicherheitsvorrichtung, eine Abschirmvorrichtung, eine RF-Antennenvorrichtung oder eine RFID-Vorrichtung umfasst.

## Revendications

1. Composition de polymère comprenant :

   a. un polymère thermoplastique, où le polymère thermoplastique comprend un polycarbonate, un copolymère de polycarbonate-polysiloxane, l'éthylène-acétate de vinyle, l'éthylène-alcool vinylique, le polyoxyméthylène, le polyacrylate, le polyacrylonitrile, le polyamide-imide, la polyéthercétone, la polycaprolactone, le polyhydroxyalcanoate, le polyimide, la polycétone, l'acide polylactique, le polyuréthane, ou l'acétate de polyvinyle ou une combinaison de ceux-ci ;
   b. un additif de structuration directe par laser ; et
   c. un composant de renforcement en verre présent en une quantité allant de plus de 0% en poids à moins de 60% en poids par rapport au poids total de la composition ;

   où la composition de polymère est capable d'être plaquée après avoir été activée en utilisant un laser ; et
   où la composition de polymère a un module de flexion supérieur à 3 GPa tel que mesuré selon la norme ASTM D790 et un module de traction supérieur à 3 GPa tel que mesuré selon la norme ASTM D638.

2. Composition de polymère de la revendication 1, dans laquelle le polymère thermoplastique est présent en une quantité allant de 10% en poids à 90% en poids par rapport au poids total de la composition.

3. Composition de polymère de l'une des revendications 1 et 2, dans laquelle le polymère thermoplastique est présent en une quantité allant de 10% en poids à 90% en poids par rapport au poids total de la composition, le composant de renforcement en verre est présent en une quantité allant de plus de 0% en poids à 60% en poids par rapport au poids total de la composition, et l'additif de structuration directe par laser est présent en une quantité allant de 1% en poids à 10% en poids par rapport au poids total de la composition

4. Composition de polymère de l'une des revendications 1 à 3, dans laquelle le polymère thermoplastique comprend un polycarbonate.

5. Composition de polymère de l'une des revendications 1 à 4, dans laquelle l'additif de structuration directe par laser comprend un oxyde métallique, un sel de cuivre, un spinelle d'oxyde métallique ou un mélange de spinelles d'oxyde métallique ou une combinaison de ceux-ci.

6. Composition de polymère de l'une des revendications 1 à 5, dans laquelle l'additif de structuration directe par laser est présent en une quantité allant de 1% en poids à 10% en poids par rapport au poids total de la composition.

7. Composition de polymère de l'une des revendications 1 à 6, dans laquelle le composant de renforcement en verre comprend une fibre de verre, un verre plat, un verre long, un verre court, un verre de grand diamètre, un verre de petit diamètre, ou un nanoverre, ou une combinaison de ceux-ci.

8. Composition de polymère de l'une des revendications 1 à 7, dans laquelle la composition de polymère a un ou plusieurs d'un module de traction, d'un module de flexion et d'un indice de placage qui augmente/augmentent avec l'augmentation d'une concentration du composant en verre.

9. Composition de polymère de l'une des revendications 1 à 8, comprenant en outre au moins un additif comprenant un plastifiant, un stabilisant, un agent antistatique, un agent ignifuge, un modificateur de résistance aux chocs, un colorant, un antioxydant, ou un agent de démoulage, ou une combinaison de ceux-ci.

10. Procédé de préparation d'une composition de polymère selon la revendication 1, comprenant la formation d'une composition de mélange comprenant :

   a. un polymère thermoplastique, où le polymère thermoplastique comprend un polycarbonate, un copolymère de polycarbonate-polysiloxane, l'éthylène-acétate de vinyle, l'éthylène-alcool vinylique, le polyoxyméthylène, le polyacrylate, le polyacrylonitrile, le polyamide-imide, la polyéthercétone, la polycaprolactone, le polyhydroxyalcanoate, le polyimide, la polycétone, l'acide polylactique, le polyuréthane ou l'acétate de polyvinyle ou une combinaison de ceux-ci ;
   b. un additif de structuration directe par laser ; et
   c. un composant de renforcement en verre présent en une quantité allant de plus de 0% en poids à moins de 60% en poids par rapport au poids total de la composition ;

   dans lequel la composition de polymère est capable d'être plaquée après avoir été activée en utilisant un laser ; et dans lequel la composition de mélange a un module de flexion supérieur à 3 GPa tel que mesuré selon la norme ASTM D790 et un module de traction supérieur à 3 GPa tel que mesuré selon la norme ASTM D638.

11. Procédé de la revendication 10, dans lequel la composition de mélange comprend en outre un plastifiant, un stabilisant, un agent antistatique, un agent ignifuge, un modificateur de résistance aux chocs, un colorant, un antioxydant ou un agent de démoulage, ou une combinaison de ceux-ci.

12. Procédé de l'une des revendications 10 et 11, dans lequel la composition de mélange est formée par extrusion à double vis.

13. Article de fabrication comprenant la composition de polymère de l'une des revendications 1 à 9.

14. Article de fabrication de la revendication 13, dans lequel l'article comprend un dispositif informatique, un appareil ménager, un dispositif de décoration, un dispositif d'interférence électromagnétique, un circuit imprimé, un dispositif Wi-Fi, un dispositif Bluetooth, un dispositif GPS, un dispositif d'antenne cellulaire, un dispositif de téléphone intelligent, un dispositif automobile, un dispositif militaire, un dispositif aérospatial, un dispositif médical, une prothèse auditive, un dispositif de détection, un dispositif de sécurité, un dispositif de protection, un dispositif d'antenne RF ou un dispositif RFID.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012128219 A1
- US 7786246 B
- US 4746701 A, Kress
- US 8017697 B, Carrillo

**Non-patent literature cited in the description**

- *CHEMICAL ABSTRACTS,* 82091-12-1